# EUROPÄISCHE PATENTANMELDUNG

(11) **EP 4 796 405 A1**
(43) Veröffentlichungstag der Anmeldung: **26.08.2026**
(21) Anmeldenummer: 26152797.2
(22) Anmeldetag: 20.01.2026
(51) Int. Cl.: B60W 40/068, B60W 40/08, B60W 40/10

(54) **VERFAHREN ZUM ERMITTELN EINES EINFLUSSES EINER POSITION EINER PERSON AUF EIN LENKMOMENT SOWIE FAHRZEUG**

(30) Priorität: 20.02.2025 DE 102025106342
(71) Anmelder: Bayerische Motoren Werke Aktiengesellschaft, 80809 München (DE); Robert Bosch GmbH, 70469 Stuttgart (DE)
(72) Erfinder: Flossmann, Martin, 83607 Waakirchen (DE); Stolle, Karl Ludwig, 71272 Renningen (DE); Wahl, Anja, 71706 Markgröningen (DE)
(74) Vertreter: Hofstetter, Schurack & Partner

(57) **Zusammenfassung**

Die Erfindung betrifft ein Verfahren zum Ermitteln wenigstens eines Einflusswerts, welcher einen Einfluss einer Relativposition zwischen einem Fahrzeug und einer das Fahrzeug (1) nutzenden Person (P) auf ein aktuell in einer Lenkung (24) des Fahrzeugs (1) wirkendes Lenkmoment charakterisiert, bei welchem mittels einer elektronischen Recheneinrichtung (17) wenigstens ein Positionswert ermittelt wird, welcher eine mittels einer Sensoreinrichtung (25) erfasste und durch die Relativposition zwischen der das Fahrzeug (1) nutzenden Person (P) und dem Fahrzeug (1) beeinflusste Messgröße charakterisiert. In Abhängigkeit von dem Positionswert wird der Einflusswert ermittelt.

## Beschreibung

Die Erfindung betrifft ein Verfahren zum Ermitteln eines Einflusses einer Relativposition zwischen einem Fahrzeug und einer das Fahrzeug nutzenden Person auf ein in einer Lenkung des Fahrzeugs wirkendes Lenkmoment. Des Weiteren betrifft die Erfindung ein Fahrzeug.

Die US 2022/0126833 A1 offenbart ein Verfahren, bei welchem Straßenreibwertinformationen empfangen werden, die Straßenreibungsschätzungen für mehrere Bereiche, die ein Fahrzeug umgeben, angeben. Aus der US 10 773 725 B1 ist ein Verfahren bekannt, bei welchem unter Nutzung von Sensoren eines Fahrzeuges Bilder ermittelt werden, die eine vor dem Fahrzeug angeordnete Fahrbahn zeigen. Der US 2018/0037234 A1 ist ein Verfahren zum Schätzen von Reibkoeffizienten eines Rads eines Fahrzeugs in Bezug auf eine darunterliegende Oberfläche als bekannt zu entnehmen. Des Weiteren offenbart die DE 10 2009 002 245 A1 ein Verfahren zur Ermittlung des Reibwerts zwischen Reifen und Fahrbahn in einem Fahrzeug. Die EP 2 290 318 B1 offenbart ein Neige-Fahrzeug. Außerdem ist aus der DE 10 2019 210 807 A1 ein Lenksystem für ein Fahrzeug bekannt, mit mindestens einem Sensor zur Ermittlung des Lenkmoments. Außerdem offenbart die WO 2020/202262 A1 ein Fahrerassistenzsystem für ein Fahrzeug. Ferner ist der DE 10 2018 202 019 A1 eine Steuerungsvorrichtung für ein Motorrad als bekannt zu entnehmen.

Aufgabe der vorliegenden Erfindung ist es, ein Verfahren und ein Fahrzeug zu schaffen, sodass ein besonders vorteilhafter Betrieb des Fahrzeugs ermöglicht werden kann.

Diese Aufgabe wird erfindungsgemäß durch ein Verfahren mit den Merkmalen des Patentanspruchs 1 sowie durch ein Fahrzeug mit den Merkmalen des Patentanspruchs 9 gelöst. Vorteilhafte Ausgestaltungen der Erfindung sind Gegenstand der abhängigen Ansprüche.

Ein erster Aspekt der Erfindung betrifft ein Verfahren zum Ermitteln eines Einflusses einer Relativposition zwischen einem Fahrzeug und einer das Fahrzeug, insbesondere aktuell, nutzenden Person auf ein aktuell in einer Lenkung des Fahrzeugs wirkendes Lenkmoment. Beispielsweise ist die Person eine Fahrerin oder ein Fahrer des Fahrzeugs, sodass die Person das Fahrzeug, insbesondere aktuell, beispielsweise derart nutzt, dass die Person das Fahrzeug fährt, insbesondere vorwärts fährt. Wenn im Folgenden die Rede von dem Fahrer oder von der Fahrerin ist, so ist darunter, falls nichts anderes angegeben ist, die das Fahrzeug, insbesondere aktuell, nutzende Person zu verstehen. Beispielsweise nutzt die Person das Fahrzeug, insbesondere aktuell, derart, dass die Person in und/oder auf dem Fahrzeug sitzt. Beispielsweise sitzt die Person in oder auf einer Sitzanlage des Fahrzeugs.

Das Verfahren wird mittels einer elektronischen Recheneinrichtung durchgeführt. Ganz insbesondere ist die elektronische Recheneinrichtung eine elektronische Recheneinrichtung des Fahrzeugs, mithin ein Bestandteil des Fahrzeugs. Mittels der elektronischen Recheneinrichtung wird wenigstens ein Positionswert ermittelt, welcher eine mittels einer, insbesondere elektrischen und/oder elektronischen, Sensoreinrichtung erfasste, das heißt gemessene Messgröße charakterisiert, das heißt beschreibt oder angibt, die durch die Relativposition zwischen der das Fahrzeug, insbesondere aktuell, nutzenden Person und dem Fahrzeug beeinflusst ist. Mit anderen Worten ist die Relativposition eine Position der das Fahrzeug, insbesondere aktuell, nutzenden Person relativ, das heißt in Relation zu dem Fahrzeug. Wenn im Folgenden die Rede von der Person ist, so ist darunter, falls nichts anderes angegeben ist, die Relativposition zu verstehen. Die Relativposition ist oder beschreibt insbesondere eine, insbesondere aktuelle, einfach auch als Art bezeichnete, Art und Weise, wie oder auf die die Person, insbesondere aktuell, in oder auf der zuvor genannten Sitzanlage des Fahrzeugs sitzt.

Die Messgröße und dadurch die Relativposition werden mittels der Sensoreinrichtung erfasst, das heißt gemessen. Beispielsweise empfängt die elektronische Recheneinrichtung ein die mittels der Sensoreinrichtung erfasste Relativposition charakterisierendes, insbesondere elektrisches, Signal, wobei beispielsweise die elektronische Recheneinrichtung durch Empfangen des Signals den Positionswert ermittelt, insbesondere dadurch, dass das Signal den Positionswert umfasst. Ferner ist es denkbar, dass die elektronische Recheneinrichtung in Abhängigkeit von dem Signal oder aus dem Signal den Positionswert ermittelt, insbesondere berechnet. Beispielsweise stellt die Sensoreinrichtung das Signal bereit. Ganz insbesondere ist das Signal ein die mittels der Sensoreinrichtung erfasste und somit gemessene Messgröße charakterisierendes Messsignal. Das Signal kann ein Rohsignal sein, oder das Signal ist ein bereits verarbeitetes und/oder bearbeitetes und/oder aufbereitetes Signal, welches beispielsweise durch Filtern bearbeitet oder aufbereitet ist.

Bei dem Verfahren wird mittels der elektronischen Recheneinrichtung in Abhängigkeit von dem Positionswert ein Einflusswert ermittelt, der den Einfluss, das heißt eine Wirkung der Relativposition zwischen der das Fahrzeug, insbesondere aktuell, nutzenden Person und dem aktuell in der Lenkung wirkenden Lenkmoment charakterisiert. Mittels der elektronischen Recheneinrichtung wird der Einflusswert in Abhängigkeit von dem Positionswert beispielsweise derart ermittelt, dass der Positionswert als der Einflusswert verwendet wird. Ferner ist es denkbar, dass mittels der elektronischen Recheneinrichtung der Einflusswert in Abhängigkeit von dem Positionswert derart ermittelt, dass mittels der elektronischen Recheneinrichtung der Einflusswert aus dem Positionswert ermittelt, insbesondere berechnet, wird, sodass beispielsweise der Einflusswert ein von dem Positionswert unterschiedlicher Wert ist, insbesondere zumindest hinsichtlich einer jeweiligen Einheit des Positionswerts und des Einflusswerts.

Der Erfindung liegt die Erkenntnis zugrunde, dass die Relativposition zwischen dem Fahrzeug und der Person insbesondere während einer Fahrt des Fahrzeugs einen nicht zu vernachlässigenden Einfluss, das heißt eine nicht zu vernachlässigende Wirkung auf das insbesondere aktuell in der Lenkung wirkende Lenkmoment haben kann. Die Erfindung ermöglicht eine besonders vorteilhafte Berücksichtigung dieses Einflusses, indem der Einflusswert in Abhängigkeit von der gemessenen Relativposition ermittelt wird. Dies bedeutet, dass auf die mittels der Sensoreinrichtung gemessene Relativposition rückgegriffen wird, um den Einfluss zu ermitteln. Hierdurch ist eine Voraussetzung geschaffen, um das Fahrzeug, insbesondere in Abhängigkeit von dem Einflusswert, besonders vorteilhaft betreiben zu können. Mit anderen Worten ist es somit beispielsweise bei dem Verfahren vorgesehen, dass wenigstens eine, insbesondere elektrische und/oder elektronische, Komponente des Fahrzeugs in Abhängigkeit von dem Einflusswert betrieben, insbesondere gesteuert oder geregelt, wird. Hierdurch kann ein besonders vorteilhafter Betrieb des Fahrzeugs realisiert werden, da die insbesondere aktuelle Relativposition zwischen der Person und dem Fahrzeug bei dem Betrieb berücksichtigt werden kann oder wird. Aus Sicht des Lenkmoments ist die Relativposition eine Beeinflussung des Lenkmoments. Das erfindungsgemäße Verfahren ermöglicht es somit, die Beeinflussung des Lenkmoments durch die Relativposition zu berücksichtigen, insbesondere bei dem Betrieb des Fahrzeugs. Insbesondere charakterisiert, beschreibt oder definiert der Einflusswert einen Lenkmomentenanteil, mithin ein das Lenkmoment beeinflussendes, beispielsweise dynamisches oder statisches Drehmoment, wodurch die Erfindung eine Voraussetzung schafft, um das Fahrzeug besonders vorteilhaft betreiben zu können. Hintergrund der Erfindung ist insbesondere, dass die Relativposition zwischen dem Fahrzeug und der das Fahrzeug nutzenden Person und somit beispielsweise in Relation zu dem Fahrzeug erfolgende Bewegungen der Person und somit auch als Positionsänderungen bezeichnete Änderungen der Position und/oder Gewichtsverlagerungen Person eine Drehmomentkomponente, mithin einen beispielsweise dynamischen oder stationären Lenkmomentenanteil des Lenkmoments bewirken können. Um einen besonders vorteilhaften Betrieb des Fahrzeugs zu ermöglichen, ist es von Vorteil, diese Beeinflussung des Lenkmoments durch die Relativposition und somit beispielsweise durch die genannten Positionsänderungen und/oder Gewichtsverlagerungen berücksichtigen zu können. Dies ist durch die Erfindung nun möglich.

Das Erfassen der Messgröße durch die Sensoreinrichtung ist nicht notwendigerweise ein Bestandteil des erfindungsgemäßen Verfahrens. Bestandteil des erfindungsgemäßen Verfahrens ist, dass die elektronische Recheneinrichtung den Positionswert ermittelt und dadurch die gemessene Messgröße berücksichtigt, um den Einflusswert und somit die Beeinflussung des Lenkmoments durch die Relativposition ermitteln zu können.

Um den Einflusswert und somit den Einfluss der Relativposition auf das Lenkmoment besonders vorteilhaft ermitteln zu können, ist es bei einer Ausführungsform der Erfindung vorgesehen, dass mittels der Sensoreinrichtung die Messgröße erfasst, das heißt gemessen wird. Beispielsweise ist oder umgebend die Sensoreinrichtung wenigstens oder genau einen Sensor, mittels welchem die durch die Relativposition beeinflusste Messgröße gemessen, das heißt erfasst wird. Hierdurch kann die Relativposition besonders vorteilhaft ermittelt werden, wodurch der Einflusswert besonders vorteilhaft ermittelt werden kann. Hierdurch ist eine Grundlage geschaffen, um das Fahrzeug besonders vorteilhaft betreiben zu können.

Insbesondere ist es möglich, durch Ermitteln des Einflusswerts und somit beispielsweise durch Berücksichtigen des Einflusswerts und somit der Relativposition bei dem Betrieb des Fahrzeugs eine nicht-neutrale Relativposition zwischen dem Fahrzeug und der Person zu berücksichtigen. Mit anderen Worten kann es sich bei der insbesondere aktuellen Relativposition zwischen der Person und dem Fahrzeug um eine sogenannte neutrale Sitzposition oder aber um eine sogenannte nicht-neutrale Sitzposition der Person handeln. Handelt es sich bei der insbesondere aktuellen Relativposition um die neutrale Sitzposition, so ist der Einfluss der Relativposition auf das Lenkmoment sehr gering oder gar null. Ist jedoch die insbesondere aktuelle Relativposition die sogenannte nicht-neutrale Sitzposition, so kann die Relativposition einen von null unterschiedlichen, sehr großen Einfluss auf das Lenkmoment haben. Das Verfahren ermöglicht es nun, diesen Einfluss besonders gut zu berücksichtigen, sodass ein besonders vorteilhafter Betrieb des Fahrzeugs realisiert werden kann. Insbesondere ist oder beschreibt der Einflusswert den zuvor genannten, aus der Relativposition resultierenden Lenkmomentenanteil, welcher ein insbesondere aktueller Anteil an dem insbesondere aktuellen Lenkmoment ist. Ganz insbesondere ist es möglich, diesen aus der Relativposition resultierenden Lenkmomentenanteil aus dem Lenkmoment herauszurechnen, beispielsweise durch Subtraktion, sodass eine Größe ermittelt werden kann, die ein insbesondere aktuell in der Lenkung wirkendes Drehmoment ohne den aus der Relativposition resultierenden Lenkmomentenanteil charakterisiert.

Da es sich bei der Person um die Fahrerin oder den Fahrer des Fahrzeugs handeln kann, und da die Person in oder auf der genannten Sitzanlage des Fahrzeugs sitzt, wird die Relativposition auch als Fahrerposition bezeichnet. Hintergrund der Erfindung ist insbesondere, dass Simulationen und Messungen gezeigt haben, dass der Einfluss der Fahrerposition auf das Lenkmoment insbesondere bei oder in querdynamischen Manövern hinsichtlich seiner Größenordnung nicht vernachlässigt werden und in der Folge herausgerechnet werden sollte. Das erfindungsgemäße Verfahren ermöglicht dies, da das erfindungsgemäße Verfahren basierend auf dem Positionswert beziehungsweise der Messgröße, der beziehungsweise die die insbesondere aktuelle Fahrerposition charakterisiert, den Einflusswert, mithin den Lenkmomentenanteil ermittelt, der beispielsweise aufgrund der aktuellen Fahrerposition erforderlich ist beziehungsweise in der Lenkung wirkt und dabei beispielsweise nicht dadurch in die Lenkung eingebracht wird, dass die Person den Lenkmomentenanteil, der auch als Lenkmomentanteil bezeichnet wird, über seine Arme in die Lenkung einbringt.

Ein Fahrer oder eine Fahrerin des Fahrzeugs kontrolliert üblicherweise eine Querdynamik eines Fahrzeugs und damit eine Fahrspur, in oder auf der das Fahrzeug, insbesondere aktuell, fährt, zumindest im Wesentlichen durch das Lenkmoment, das der Fahrer oder die Fahrerin über eine beispielsweise als Lenker oder Lenkrad ausgebildete Lenkhandhabe des Fahrzeugs einstellt, insbesondere derart, dass der Fahrer oder die Fahrerin über seine beziehungsweise ihre Arme das Lenkmoment beziehungsweise ein das Lenkmoment beeinflussendes Drehmoment auf die Lenkhandhabe ausübt. Insbesondere dann, wenn das Fahrzeug als ein einspuriges Zweirad, insbesondere als ein Motorrad, ausgebildet ist, lässt sich die Querdynamik jedoch auch durch die Relativposition zwischen dem Fahrzeug und dem Fahrer beziehungsweise der Fahrerin, mithin durch eine Schwerpunktverlagerung der Fahrerin oder des Fahrers beeinflussen, wenn auch in geringerem Umfang als durch Ausüben einer Kraft oder eines Drehmoments auf die Lenkung.

Unter der Annahme, dass die Person in einem Aufsitzpunkt in oder auf der Sitzanlage des Fahrzeugs sitzt, so ergibt sich durch ein seitliches, mithin in Fahrzeugquerrichtung des Fahrzeugs erfolgendes Verlagern, insbesondere Verschieben, des Aufsitzpunkts gegenüber der auch als Hochachse bezeichneten Fahrzeughochrichtung des Fahrzeugs, dessen Fahrzeughochrichtung beispielsweise durch den einfach auch als Schwerpunkt bezeichneten Masseschwerpunkt des Fahrzeugs verläuft, und durch Einstellen eines, insbesondere relativen, Winkels rₗₑₐₙ des Oberkörpers der Person zur auch als Hochachse bezeichneten Fahrzeughochrichtung des Fahrzeugs eine Schwerpunktverlagerung in einer auch mit y-z-Ebene bezeichnete Ebene des Fahrzeugs, wobei die Ebene durch die Fahrzeugquerrichtung (y-Richtung) und die Fahrzeughochrichtung (z-Richtung) aufgespannt ist. Ein seitlicher und somit in Fahrzeugquerrichtung des Fahrzeugs verlaufender Versatz des Aufsitzpunkts zu der vorzugsweise durch den Schwerpunkt des Fahrzeugs und ganz vorzugsweise gerade verlaufenden Fahrzeughochrichtung des Fahrzeugs wird mit r_{offs} bezeichnet. Ist der Aufsitzpunkt gegenüber der Fahrzeughochrichtung nicht in Fahrzeugquerrichtung des Fahrzeugs verlagert, das heißt versetzt, so ist der seitliche, mithin in Fahrzeugquerrichtung verlaufende Versatz r_{offs} null. Mit anderen Worten liegt dann der Aufsitzpunkt auf der Fahrzeughochrichtung, die auch als Hochachse oder Fahrzeughochachse bezeichnet wird. Die Fahrzeugquerrichtung verläuft entlang einer gedachten Geraden und wird auch als Querachse oder Fahrzeugquerachse bezeichnet. Ist jedoch der Aufsitzpunkt in Fahrzeugquerrichtung, mithin entlang der Querachse gegenüber der Fahrzeughochrichtung, mithin gegenüber der Hochachse verlagert, mithin versetzt, so weist der seitliche Versatz r_{offs} einen von null unterschiedlichen Wert auf. Der genannte Winkel rₗₑₐₙ verläuft in der genannten y-z-Ebene, mithin ist ein in dieser Ebene betrachteter Winkel. Ist in der Ebene betrachtet der Oberkörper der das Fahrzeug insbesondere aktuell nutzenden Person nicht seitlich, das heißt in Fahrzeugquerrichtung gegenüber der Fahrzeughochrichtung, mithin gegenüber der Hochachse geneigt, so beträgt der Winkel rₗₑₐₙ null. Ist jedoch in der Ebene betrachtet der Oberkörper der das Fahrzeug insbesondere aktuell nutzenden Person seitlich, das heißt in Fahrzeugquerrichtung gegenüber der Fahrzeughochrichtung geneigt, so weist der Winkel rₗₑₐₙ einen von null unterschiedlichen Wert auf, insbesondere in der Einheit "Grad". Weist der seitliche Versatz r_{offs} einen von null unterschiedlichen Wert auf und/oder weist der auch als relativer Oberkörperwinkel bezeichnete Winkel rₗₑₐₙ einen von null unterschiedlichen Wert auf, so ist die insbesondere aktuelle Relativposition zwischen der Person und dem Fahrzeug die zuvor genannte, nicht-neutrale Sitzposition, die auch als nicht-neutrale Fahrersitzposition oder nicht-neutrale Position bezeichnet wird. Ist der seitliche Versatz r_{offs} null und ist, insbesondere gleichzeitig, der relative Winkel rₗₑₐₙ null, so ist die aktuelle Relativposition die zuvor genannte, neutrale Sitzposition, welche auch als neutrale Fahrersitzposition oder neutrale Position bezeichnet wird.

Insbesondere dann, wenn das Fahrzeug ein einspuriges Zweirad ist, kann der Fahrer oder die Fahrerin des Fahrzeugs ein und denselben Kurvenverlauf sowohl mit neutraler Fahrersitzposition als auch mit nicht-neutraler Fahrersitzposition folgen, der Fahrer beziehungsweise die Fahrerin muss dabei jedoch unterschiedliche Lenkmomente stellen, mithin unterschiedliche Drehmomente oder Kräfte über seine beziehungsweise ihre Arme auf die Lenkung ausüben. Im Folgenden wird nur von dem Fahrer gesprochen, wobei darunter auch die Fahrerin des Fahrzeugs zu verstehen ist. Bei neutraler Sitzposition stellt der Fahrer beispielsweise ein mit Mₙₑᵤₜᵣₐₗ bezeichnetes Drehmoment, um einer Kurve zu folgen. Dies bedeutet, dass bei neutraler Sitzposition der Fahrer über seine Arme das Drehmoment Mₙₑᵤₜᵣₐₗ auf die Lenkhandhabe ausübt, um der Kurve zu folgen, das heißt, um das Fahrzeug zu lenken und dadurch entlang der Kurve zu fahren. Bei nicht-neutraler Sitzposition stellt der Fahrer ein mit M_{non_neutral} bezeichnetes Drehmoment, um derselben Kurve zu folgen. Mit anderen Worten, bei nicht-neutraler Sitzposition übt der Fahrer über seine Arme das Drehmoment M_{non_neutral} auf die Lenkhandhabe aus, um derselben Kurve zu folgen, das heißt, um das Fahrzeug zu lenken und dadurch entlang derselben Kurve zu fahren. Dabei ist das M_{non_neutral} von r_{offs} und rₗₑₐₙ abhängig, sodass gilt: ${M}_{non _ neutral} \left({r}_{offs}, {r}_{lean}\right)$

Entsprechend der unten stehenden Gleichung (1) unterscheidet sich M_{non_neutral} von Mₙₑᵤₜᵣₐₗ um dM_{riderpos}, dem Lenkmomentanteil der aufgrund der nichtneutralen Fahrersitzposition erforderlich ist. ${M}_{non _ neutral} \left({r}_{offs}, {r}_{lean}\right) = {M}_{neutral} + {dM}_{riderpos} \left({r}_{offs}, {r}_{lean}\right)$

Umfassende Simulationsstudien haben gezeigt, dass im Normalfahrbereich dM_{riderpos} annähernd linear von r_{offs} und rₗₑₐₙ abhängt.

In einer Ausprägungsform lässt sich dM_{riderpos} für eine gemessene Sitzposition (r_{offs}, rₗₑₐₙ) über folgende Beziehung abhängig von r_{offs} und rₗₑₐₙ ermitteln. ${dM}_{riderpos} \left({r}_{offs}, {r}_{lean}\right) = {C}_{roffs} * {r}_{offs} + {C}_{rlean} * {r}_{rlean}$

Mit C_{roffs} und Cᵣₗₑₐₙ sind oben Konstanten bezeichnet, die sich zum Beispiel mit Simulationsdaten identifizieren lassen. Die Simulationsdaten umfassen beispielsweise eine Beschreibung eines Gesamtsystems, welches das Fahrzeug gegebenenfalls zusätzlich mit daran angebrachtem Gepäck mit Beladung sowie die das Fahrzeug nutzende Person umfasst. Für alle daraus resultierenden Kombinationen aus Fahrzeug, Beladungszustand des Fahrzeugs und Gewicht der das Fahrzeug nutzenden Person können die oben genannten Konstanten C_{roffs} und Cᵣₗₑₐₙ ermittelt und beispielsweise in Nachschlagetabellen und/oder Kennfeldern in Abhängigkeit von den Simulationsdaten abgespeichert sind oder werden. Die Nachschlagetabellen werden auch als Look-up-Tabellen bezeichnet. Beispielsweise mittels Interpolationsverfahren können die Konstanten C_{roffs} und Cᵣₗₑₐₙ auch für nicht explizit simulierte und somit nicht explizit in den Nachschlagetabellen enthaltene Kombinationen aus Fahrzeug, Beladungszustand und Gewicht der Person ermittelt, insbesondere abgeschätzt, werden.

Ferner ist mit dM_{riderpos} der zuvor genannte Lenkmomentenanteil, mithin der Einflusswert und ein den Einflusswert charakterisierender Wert bezeichnet.

Eine weitere Ausprägungsform, mit welcher auch eine nichtlineare Abhängigkeit von dM_{riderpos} von r_{offs} und rₗₑₐₙ beschrieben werden kann, ist die Speicherung einer 2-dimensionalen Lookup Tabelle, in welcher für Wertepaare (r_{offs_i}, r_{lean_i}) der Lenkmomentanteil dM_{riderpos_i}(r_{offs_i}, r_{lean_i}) aufgrund der nichtneutralen Fahrersitzposition abgelegt ist. Mittels Interpolationsverfahren kann der Wert dM_{riderpos}(r_{offs}, rₗₑₐₙ) für ein gemessenes Wertepaar (r_{offs}, rₗₑₐₙ) ausgelesen werden.

Ganz generell ist das zu stellende Lenkmoment bei der Kurvenfahrt abhängig von der Geschwindigkeit v und der für die Kurvenfahrt notwendigen Schräglage φ des Motorrads. D.h. M_{non_neutral}, Mₙₑᵤₜᵣₐₗ und somit auch dM_{riderpos} sind abhängig von v und φ. ${M}_{non _ neutral} \left({r}_{offs}, {r}_{lean}, v, φ\right) = {M}_{neutral} \left(v, φ\right) + {dM}_{riderpos} \left({r}_{offs}, {r}_{lean}, v, φ\right)$

Eine genauere Modellierung des Lenkmomentanteils dM_{riderpos} berücksichtigt neben r_{offs} und rₗₑₐₙ auch v und φ.

In einer weiteren Ausprägungsform wird der Lenkmomentanteil dM_{riderpos}(r_{offs}, rₗₑₐₙ, v, φ) entsprechend Gleichung (4) ermittelt, wobei die Größen C_{roffs} und Cᵣₗₑₐₙ von der Geschwindigkeit v und der Schräglage φ des Motorrads abhängen und entsprechend Gleichung (5) bestimmt werden. ${dM}_{riderpos} \left({r}_{offs}, {r}_{lean}, v, φ\right) = {C}_{roffs} \left(v, φ\right) * {r}_{offs} + {C}_{rlean} \left(v, φ\right) * {r}_{rlean}$ ${C}_{roffs} \left(v, φ\right) = c {0}_{roffs} + {cv}_{roffs} * v + {cφ}_{roffs} * φ$ ${C}_{rlean} \left(v, φ\right) = c {0}_{rlean} + {cv}_{rlean} * v + {cφ}_{rlean} * φ$

Die Konstanten c0_{roffs}, cv_{roffs}, cφ_{roffs}, c0ᵣₗₑₐₙ, cvᵣₗₑₐₙ und cφᵣₗₑₐₙ lassen sich z.B. mit Hilfe von Simulationsdaten identifizieren.

Die Simulationsdaten umfassen eine Beschreibung des Gesamtsystems bestehend aus dem Motorrad, ggf. zusätzlich angebrachtem Gepäck mit Beladung sowie des Fahrers. Für alle daraus resultierenden Kombinationen aus Motorrad, Beladungszustand und Fahrergewicht können die Konstanten c0_{roffs}, cv_{roffs}, cφ_{roffs}, c0ᵣₗₑₐₙ, cvᵣₗₑₐₙ und cφᵣₗₑₐₙ ermittelt und in Lookup-Tabellen in Abhängigkeit der Simulationsdaten abgespeichert werden. Mittels Interpolationsverfahren können die Konstanten c0_{roffs}, cv_{roffs}, cφ_{roffs}, c0ᵣₗₑₐₙ, cvᵣₗₑₐₙ und cφᵣₗₑₐₙ auch für nicht explizit simulierte Kombinationen aus Motorrad, Beladungszustand und Fahrergewicht abgeschätzt werden.

Eine weitere Ausprägungsform, mit welcher auch eine nichtlineare Abhängigkeit von dM_{riderpos} von r_{offs}, rₗₑₐₙ, v und φ beschrieben werden kann, ist die Speicherung einer 4-dimensionalen Lookup Tabelle, in welcher für Wertequadrupel (r_{offs_i}, r_{lean_i}, v_{_i}, φ_{_i}) der Lenkmomentanteil dM_{riderpos_i}(r_{offs_i}, r_{lean_i}, v_{_i}, φ_{_i}) aufgrund der nichtneutralen Fahrersitzposition abgelegt ist. Mittels Interpolationsverfahren kann der Wert dM_{riderpos}(r_{offs}, rₗₑₐₙ, , v, φ) für ein gemessenes Wertequadrupel (r_{offs}, rₗₑₐₙ, , v, φ) ausgelesen werden.

Das zuvor genannte, aktuell in der Lenkung des Fahrzeugs wirkende Lenkmoment ist ein auch als Lenkdrehmoment bezeichnetes Drehmoment, welches beispielsweise um eine auch als Lenkachse wirkt.

Das Fahrzeug weist beispielsweise wenigstens oder genau ein Fahrzeugrad auf. Insbesondere weist das Fahrzeug wenigstens oder genau zwei Fahrzeugräder auf, insbesondere dann, wenn das Fahrzeug als einspuriges Zweirad ausgebildet ist. Das Fahrzeugrad ist ein Bodenkontaktelement, über welches das Fahrzeug in Fahrzeughochrichtung des Fahrzeugs nach unten hin an einem Boden abstützbar oder abgestützt ist, insbesondere während des Verfahrens. Insbesondere ist es denkbar, dass das Verfahren bei einer Fahrt des Fahrzeugs durchgeführt wird, welches bei der Fahrt entlang des Bodens gefahren wird und in Fahrzeughochrichtung nach unten hin über das Bodenkontaktelement an dem Boden abgestützt ist. Dabei rollt das Bodenkontaktelement, insbesondere direkt, an dem Boden ab. Der Boden wird auch als Untergrund bezeichnet und ist durch einen Untergrund gebildet. Das Fahrzeugrad wird auch einfach als Rad bezeichnet. Insbesondere umfasst beispielsweise das Fahrzeugrad eine Felge und einen insbesondere separat von der Felge ausgebildeten Reifen, welcher auf die Felge aufgezogen und somit durch die Felge getragen ist. Beispielsweise ist der Reifen aus Gummi gebildet. Insbesondere ist das Fahrzeugrad um eine Raddrehachse relativ zu einem Bauelement des Fahrzeugs drehbar an dem Bauelement gehalten, wobei insbesondere vorgesehen ist, dass während des Verfahrens das Fahrzeugrad, insbesondere direkt, an dem Boden abrollt und sich dabei um die Raddrehachse relativ zu dem Bauelement dreht. Insbesondere handelt es sich bei dem Bauelement um ein beispielsweise als Gabel, insbesondere Vorderradgabel, ausgebildetes Lenkelement der Lenkung des Fahrzeugs, wobei das Lenkelement beispielsweise um die auch als Lenkachse bezeichnete Schwenkachse relativ zu einem beispielsweise als Rahmen, insbesondere als Gitterrahmen, ausgebildeten Fahrgestell des Fahrzeugs verschwenkbar an dem Fahrgestell gehalten ist. Dabei ist das beispielsweise als Vorderrad ausgebildete Fahrzeugrad mit dem Lenkelement um die Lenkachse relativ zu dem Fahrgestell mitverschwenkbar.

Durch um die Lenkachse und relativ zu dem Fahrgestell erfolgendes Verschwenken des Lenkelements und somit des Fahrzeugrads kann das Fahrzeug gelenkt werden, mithin können dadurch Kurvenfahrten, Fahrtrichtungsänderungen und Fahrbahnbeziehungsweise Fahrspurwechsel des Fahrzeugs bewirkt werden. Beispielsweise kann die das Fahrzeug nutzende Person das Lenkelement und mit diesem das Fahrzeugrad um die Lenkachse relativ zu dem Fahrgestell verschwenken, um dadurch das Fahrzeug zu lenken, mithin um dadurch Kurvenfahrten, Fahrtrichtungsänderungen und Fahrspurbeziehungsweise Fahrbahnwechsel des Kraftfahrzeugs zu bewirken. Hierfür übt die Person, insbesondere während sie auf oder in der Sitzanlage sitzt, über ihre Arme eine Kraft oder ein Drehmoment auf das Lenkelement aus, woraus das aktuell in der Lenkung wirkende Lenkmoment resultiert. Beispielsweise ist das Lenkelement die zuvor genannte Lenkhandhabe.

Das von der Person über deren Arme auf das Lenkelement und somit auf die Lenkung ausübbare oder ausgeübte, mithin in die Lenkung einbringbare oder eingebrachte Drehmoment wird auch als Personenmoment oder Personendrehmoment bezeichnet. Somit ist beispielsweise das Lenkmoment ein um die Lenkachse wirkendes Drehmoment, welches beispielsweise dadurch in der Lenkung wirkt, dass die Person insbesondere mit ihren Armen beziehungsweise Händen das Personenmoment auf die Lenkung, insbesondere auf das Lenkelement und über das Lenkelement auf die Lenkung, ausübt. Beispielsweise ist das Lenkmoment das Personenmoment, insbesondere dann, wenn r_{offs} und rₗₑₐₙ, insbesondere gleichzeitig, null sind. Ferner ist es denkbar, dass das Lenkmoment aus dem Personenmoment resultiert. Das Lenkmoment resultiert insbesondere dann aus dem Personenmoment, wenn das Lenkmoment das Personenmoment ist, mithin wenn r_{offs} und rₗₑₐₙ, insbesondere gleichzeitig, null sind. Ferner kann das Lenkmoment aus dem Personenmoment und aus dem aus der Relativposition resultierenden Lenkmomentenanteil resultieren, insbesondere dann, wenn r_{offs} und/oder rₗₑₐₙ ungleich null sind beziehungsweise ist. Dann setzt sich das Lenkmoment zumindest aus dem Personenmoment und aus dem aus der Relativposition resultierenden Lenkmomentenanteil zusammen, da die Person die nicht-neutrale Sitzposition einnimmt, die das Lenkmoment beeinflusst. Sind r_{offs} und rₗₑₐₙ, insbesondere gleichzeitig, null, so beeinflusst die Relativposition das Lenkmoment nicht.

Somit ist beispielsweise das zuvor bezeichnete Lenkmoment, welches von der Person über ihre Arme auf die Lenkung ausgeübt und somit in die Lenkung eingebracht wird, das genannte Personenmoment.

Um die Relativposition besonders vorteilhaft erfassen und somit den Einfluss der Relativposition auf das Lenkmoment besonders vorteilhaft ermitteln zu können, ist es in weiterer Ausgestaltung der Erfindung vorgesehen, dass als zumindest ein Teil der Sensoreinrichtung eine Sensoreinrichtung des Fahrzeugs verwendet wird.

Eine weitere Ausführungsform zeichnet sich dadurch aus, dass als zumindest ein Teil der Sensoreinrichtung eine an der Person angeordnete Sensoreinrichtung verwendet wird, wodurch die Relativposition besonders vorteilhaft gemessen werden kann.

Um die Relativposition besonders vorteilhaft und insbesondere für die Person besonders angenehm und einfach erfassen zu können, ist es in weiterer Ausgestaltung der Erfindung vorgesehen, dass als zumindest ein Teil der Sensoreinrichtung eine an wenigstens einem Kleidungsstück der Person angeordnete Sensoreinrichtung verwendet wird, wobei die Person das Kleidungsstück während des Verfahrens trägt und somit an ihrem Körper trägt.

Um einen besonders vorteilhaften Betrieb des Fahrzeugs ermöglichen zu können, ist es in weiterer Ausgestaltung der Erfindung vorgesehen, dass mittels der elektronischen Recheneinrichtung, welche ganz vorzugsweise ein Bestandteil des Fahrzeugs ist, wenigstens ein Ist-Drehmomentwert ermittelt wird, welcher das aktuelle, in der Lenkung des Fahrzeugs wirkende Lenkmoment charakterisiert, das heißt angibt oder beschreibt, wobei mittels der elektronischen Recheneinrichtung der Ist-Drehmomentwert ermittelt wird, indem mittels der elektronischen Recheneinrichtung der Ist-Drehmomentwert in Abhängigkeit von dem Einflusswert ermittelt wird. Dabei ist es vorzugsweise vorgesehen, dass die wenigstens eine Komponente des Fahrzeugs in Abhängigkeit von dem Ist-Drehmomentwert betrieben wird.

Beispielsweise wird mittels einer Erfassungseinrichtung, insbesondere des Fahrzeugs, das in der Lenkung, insbesondere aktuell wirkende Lenkmoment erfasst. Dabei stellt beispielsweise die Erfassungseinrichtung ein insbesondere elektrisches Erfassungseinrichtungssignal bereit, wobei beispielsweise die elektronische Recheneinrichtung das Erfassungseinrichtungssignal empfängt. Das Erfassungseinrichtungssignal charakterisiert das mittels der Erfassungseinrichtung erfasste Lenkmoment, sodass beispielsweise das Erfassungseinrichtungssignal den Ist-Drehmomentwert umfasst. Dadurch, dass die elektronische Recheneinrichtung das Erfassungseinrichtungssignal empfängt, ermittelt beispielsweise die elektronische Recheneinrichtung den Ist-Drehmomentwert. Ferner ist es denkbar, dass die elektronische Recheneinrichtung das Erfassungseinrichtungssignal empfängt und in Abhängigkeit von dem empfangenen Erfassungseinrichtungssignal den Ist-Drehmomentwert ermittelt, insbesondere berechnet.

Um einen besonders vorteilhaften Betrieb des Fahrzeugs realisieren zu können, ist es bei einer weiteren Ausführungsform vorgesehen, dass mittels der elektronischen Recheneinrichtung wenigstens eine, insbesondere aktuelle, Größe ermittelt wird, welche eine aktuell Reibung zwischen dem zuvor genannten Fahrzeugrad und dem aktuellen, den Boden bildenden Untergrund charakterisiert, an welchem beispielsweise das Fahrzeugrad aktuell in Fahrzeughochrichtung des Fahrzeugs nach unten hin abgestützt ist. Die Größe umfasst beispielsweise wenigstens einen die aktuelle Reibung charakterisierenden Ist-Reibwert und/oder wenigstens eine die aktuelle Reibung charakterisierende Reibwertklasse, oder die Größe ist ein die aktuelle Reibung charakterisierender Ist-Reibwert oder die Größe ist eine die aktuelle Reibung charakterisierende Reibwertklasse. Insbesondere ist die durch die Größe charakterisierte Reibung eine Reibung zwischen dem Fahrzeugrad, insbesondere einem Kontaktpunkt oder einem Kontaktbereich des Fahrzeugrads, und einem Untergrundbereich des Untergrunds, wobei das Fahrzeugrad in dem Kontaktpunkt oder dem Kontaktbereich den Untergrundbereich, insbesondere direkt, berührt. Insbesondere erstreckt sich der Untergrundbereich in einer auch als Fahrbahnebene bezeichneten Untergrundebene, die beispielsweise schräg oder aber senkrecht zur Vertikalen verlaufen kann.

Bei dem Verfahren wird mittels der elektronischen Recheneinrichtung wenigstens ein Ist-Winkelwert ermittelt, welcher einen aktuellen Rollwinkel des Fahrzeugs charakterisiert. Unter Rollen ist eine Bewegung des Fahrzeugs um dessen auch als Längsachse oder Fahrzeuglängsachse bezeichnete Fahrzeuglängsrichtung zu verstehen, wobei der Rollwinkel ein Winkel ist, um welchen das Fahrzeug insbesondere bezogen auf eine als Neutralstellung bezeichnete Ausgangsstellung, insbesondere aktuell, rollt, mithin um die einfach auch als Längsachse bezeichnete Fahrzeuglängsachse geneigt ist. Grundsätzlich ist es denkbar, dass der aktuelle Rollwinkel und somit beispielsweise der Ist-Winkelwert null sind, sodass sich das Fahrzeug in der genannten Ausgangsstellung befindet, oder aber der aktuelle Rollwinkel ist ein von null unterschiedlicher Wert, um welchen das Fahrzeug aktuell um die Längsachse insbesondere in Fahrzeugquerrichtung geneigt ist, sodass sich das Fahrzeug beispielsweise aktuell um die Längsachse betrachtet in einer von der Neutralstellung unterschiedlichen Neigungsstellung befindet und sodass beispielsweise der Ist-Winkelwert ein von null unterschiedlicher Wert ist. Beispielsweise wird der aktuelle Rollwinkel mittels der elektronischen Recheneinrichtung berechnet. Ferner ist es denkbar, dass der aktuelle Rollwinkel mittels der Erfassungseinrichtung des Fahrzeugs erfasst wird, wobei der Ist-Winkelwert den mittels der Erfassungseinrichtung erfassten, aktuellen Rollwinkel charakterisiert.

Bei dem Verfahren wird beispielsweise mittels der elektronischen Recheneinrichtung, welcher auch als Steuergerät bezeichnet wird, wenigstens ein Ist-Geschwindigkeitswert ermittelt, welcher eine aktuelle, einfach auch als Geschwindigkeit bezeichnete Fahrgeschwindigkeit des Fahrzeugs charakterisiert, das insbesondere während des Verfahrens entlang des Untergrunds, insbesondere vorwärts, fährt, insbesondere während das Fahrzeug in Fahrzeughochrichtung des Fahrzeugs nach unten hin über das Fahrzeugrad an dem Untergrund abgestützt ist, sodass das Fahrzeugrad, insbesondere direkt, an dem Untergrund abrollt. Insbesondere sind die aktuelle Fahrgeschwindigkeit des Fahrzeugs und somit beispielsweise der Ist-Geschwindigkeitswert von null unterschiedlich und insbesondere größer als null, sodass beispielsweise während des Verfahrens beziehungsweise bei dem Verfahren das Fahrzeug mit der Fahrgeschwindigkeit, insbesondere vorwärts, entlang der Untergrunds gefahren wird. Beispielsweise wird die aktuelle Fahrgeschwindigkeit des Fahrzeugs mittels der Erfassungseinrichtung des Fahrzeugs gemessen, sodass beispielsweise der Ist-Geschwindigkeitswert die aktuelle, gemessene Fahrgeschwindigkeit charakterisiert, das heißt angibt, beschreibt oder definiert. Der ermittelte Ist-Winkelwert gehört zu dem ermittelten Ist-Geschwindigkeitswert und umgekehrt, sodass der ermittelte Ist-Winkelwert und der ermittelte Ist-Geschwindigkeitswert ein Ist-Wertepaar bilden. Hierunter ist nicht notwendigerweise zu verstehen, dass die elektronische Recheneinrichtung aus dem Ist-Winkelwert und dem Ist-Geschwindigkeitswert das genannte Ist-Wertepaar bildet, mithin führt die elektronische Recheneinrichtung nicht notwendigerweise einen speziellen Rechenschritt durch, um aus dem Ist-Winkelwert und dem Ist-Geschwindigkeitswert das Ist-Wertepaar zu bilden oder den Ist-Winkelwert und den Ist-Geschwindigkeitswert dem Ist-Wertepaar zuzuordnen oder dergleichen, sondern grundsätzlich werden der ermittelte Ist-Winkelwert und der ermittelte Ist-Geschwindigkeitswert als das genannte Ist-Wertepaar bildende Werte angesehen. Dies ist insbesondere der Fall, um anhand des Begriffs "Ist-Wertepaar" das Verfahren im Weiteren anschaulich nachvollziehbar beschreiben zu können.

Bei dem Verfahren wird mittels der elektronischen Recheneinrichtung in Abhängigkeit von dem Ist-Wertepaar, das heißt in Abhängigkeit von dem Ist-Winkelwert und in Abhängigkeit von dem Ist-Geschwindigkeitswert aus wenigstens einem für einen Referenz-Reibwert ermittelten Referenz-Kennfeld, welches mehrere Referenz-Winkelwerte, mehrere Referenz-Geschwindigkeitswerte und mehrere Referenz-Drehmomentwerte umfasst und einem jeweiligen Referenz-Wertepaar, welches genau einen der Referenz-Winkelwerte und genau einen der Referenz-Geschwindigkeitswerte umfasst, genau einen der Referenz-Drehmomentwerte zuordnen, eines der Referenz-Wertepaare als zu dem Ist-Wertepaar gehörendes Wertepaar ausgewählt wird. Somit ist das Referenz-Kennfeld beispielsweise ein zumindest oder genau dreidimensionales Kennfeld, welches sozusagen die Referenz-Drehmomentwerte über den Referenz-Winkelwerten und über den Referenz-Geschwindigkeitswerten angibt. Denkbar dabei ist, dass dem jeweiligen Referenz-Drehmomentwert mehrere der Referenz-Wertepaare zugeordnet sind. Denkbar ist ferner, dass der gleiche Referenz-Winkelwert Teil mehrerer der Referenz-Wertepaare ist. Ferner ist es denkbar, dass der gleiche Referenz-Geschwindigkeitswert Teil mehrerer der Referenz-Wertepaare ist. Unter dem Merkmal, dass das jeweilige Referenz-Wertepaar genau einen der Referenz-Winkelwerte und genau einen der Referenz-Geschwindigkeitswerte umfasst und unter dem Merkmal, dass, insbesondere genau, eines der Referenz-Wertepaare als zu dem Ist-Wertepaar gehörendes Wertepaar ausgewählt wird, muss nicht notwendigerweise verstanden werden, dass die Referenz-Wertepaare, mithin die Referenz-Winkelwerte und die Referenz-Geschwindigkeitswerte, als die Referenz-Wertepaare tatsächlich in dem Referenz-Kennfeld gespeichert und enthalten sind, sondern der Begriff "Referenz-Wertepaar" wird zunächst nur verwendet, um das Verfahren im Folgenden anschaulich und nachvollziehbar beschreiben zu können. Somit ist insbesondere unter dem Merkmal, dass in Abhängigkeit von dem Ist-Wertepaar, mithin in Abhängigkeit von dem Ist-Geschwindigkeitswert und in Abhängigkeit von dem Ist-Winkelwert, insbesondere genau, eines der Referenz-Wertepaare ausgewählt wird, zu verstehen, dass in Abhängigkeit von dem Ist-Wertepaar, mithin in Abhängigkeit von dem Ist-Geschwindigkeitswert und in Abhängigkeit von dem Ist-Winkelwert, insbesondere genau, einer der Referenz-Winkelwerte und, insbesondere genau, einer der Referenz-Geschwindigkeitswerte ausgewählt werden, wobei der ausgewählte Referenz-Winkelwert und der ausgewählte Referenz-Geschwindigkeitswert zu dem ermittelten Ist-Wertepaar, mithin zu dem ermittelten Ist-Winkelwert und zu dem ermittelten Ist-Geschwindigkeitswert gehören und das beispielsweise nur gedachte Referenz-Wertepaar bilden.

Mittels der elektronischen Recheneinrichtung wird der dem ausgewählten Referenz-Wertepaar zugeordnete Referenz-Drehmomentwert ermittelt, insbesondere aus dem Referenz-Kennfeld, welches auch einfach als Kennfeld bezeichnet wird, ausgelesen. Dies bedeutet, dass mittels der elektronischen Recheneinrichtung in Abhängigkeit von dem ausgewählten Referenz-Winkelwert und in Abhängigkeit von dem ausgewählten Referenz-Geschwindigkeitswert, insbesondere genau, einer der Referenz-Drehmomente ermittelt wird.

Mittels der elektronischen Recheneinrichtung wird der ermittelte Referenz-Drehmomentwert mit dem Ist-Drehmomentwert verglichen. Mit anderen Worten wird mittels der elektronischen Recheneinrichtung ein Vergleich durchgeführt, bei dem der ermittelte Referenz-Drehmomentwert mit dem ermittelten Ist-Drehmomentwert verglichen wird.

Mittels der elektronischen Recheneinrichtung wird die Größe in Abhängigkeit von dem Vergleich des Referenz-Drehmomentwerts mit dem Ist-Drehmomentwert ermittelt. Ferner ist es vorzugsweise vorgesehen, dass bei dem Verfahren mittels der elektronischen Recheneinrichtung wenigstens eine Komponente des Fahrzeugs, das heißt wenigstens eine Funktion des Fahrzeugs, in Abhängigkeit von der ermittelten Größe betrieben, insbesondere gesteuert oder geregelt, wird.

Der Erfindung liegen insbesondere die folgenden Erkenntnisse und Überlegungen zugrunde: Für eine hohe Anzahl von Fahrzeug- und Fahrerassistenzsystemen eines Fahrzeugs, ist eine Information über einen vorhandenen Reibwert oder eine vorhandene Reibwertklasse zwischen dem Fahrzeugrad und dem Untergrund, insbesondere in der Kontaktfläche zwischen dem Fahrzeugrad und dem Untergrund, von Bedeutung. Dies gilt insbesondere für Fahrzeug- und Fahrerassistenzsysteme, welche die Fahrzeugdynamik betreffen. In bestehenden Anwendungen wird der zum aktuellen Zeitpunkt ausgenutzte Reibwert oder die aktuelle Reibwertklasse üblicherweise geschätzt, meist unter Verwendung gemessener Inertialgrößen, welche beispielsweise bei Beschleunigungen des Fahrzeugs und/oder Drehraten des Fahrzeugs umfassen. Dies kann jedoch üblicherweise nicht die Information des zum aktuellen Zeitpunkt maximal verfügbaren Reibwertes beziehungsweise der zum aktuellen Zeitpunkt maximal verfügbaren Reibwertklasse liefern. Für diesen wird meist eine Annahme getroffen beziehungsweise wird er durch bewusstes Überschreiten der maximal übertragbaren Reifenkräfte (Grenzbereich) geschätzt, zum Beispiel in einem Antiblockiersystem (ABS). Ein weiterer Hintergrund ist, dass sowohl die Kinematik der Kurvenfahrt als auch die Kinetik der auch als Lenksystem bezeichneten Lenkung im Hinblick auf Kräfte und einfach auch als Momente bezeichnete Drehmomente im Lenksystem während einer Kurvenfahrt sich grundlegend unterscheiden für beispielsweise als Motorräder ausgebildete und beispielsweise einspurige Zweiräder von denen von Kraftwagen wie beispielsweise Personenkraftwagen. Aus dem Stand der Technik bekannte Methoden, die nicht auf einer Sensierung des Umfelds basieren, lassen sich deshalb nicht auf die Schätzung des maximalen Reibwerts für beispielsweise einspurige Zweiräder übertragen. Demgegenüber nutzt die Erfindung die Ermittlung, insbesondere eine Messung, des in der Lenkung (Lenksystem) wirkenden Lenkmoments, welches insbesondere um die zuvor genannte Lenkachse wirkt.

Des Weiteren geht die Erfindung davon aus, dass in heutigen Serienfahrzeugen wie beispielsweise Serienzweirädern, welche insbesondere einspurig ausgebildet sind, keine Information über den insbesondere aktuell und vorzugsweise maximal möglichen Reibwert in der Kontaktfläche zwischen dem Fahrzeugrad, insbesondere dem Reifen, und dem Untergrund verfügbar ist, da bislang keine Methode zur Ermittlung dieser Größe insbesondere während einer normalen, auch als Straßenfahrt bezeichneten Fahrt existiert. Der Reibwert, insbesondere der maximal mögliche Reibwert, zwischen dem Fahrzeugrad und dem Untergrund kann jedoch eine Größe darstellen, die im Vergleich zu herkömmlichen Lösungen zur Verbesserung existierender Sicherheits- und Assistenzsysteme und für zukünftige Sicherheits- und Assistenzsysteme genutzt werden kann. Dabei ermöglicht die Erfindung eine, insbesondere fortlaufende, Ermittlung, insbesondere eine, insbesondere fortlaufende, Schätzung, der Größe und somit der aktuellen Reibung zwischen dem Fahrzeugrad und dem aktuellen Untergrund. Somit ist es vorzugsweise vorgesehen, dass die mittels des Verfahrens ermittelte Größe den aktuell maximal möglichen Reibwert zwischen dem Fahrzeugrad und dem Untergrund oder die aktuell maximal mögliche Reibwertklasse zwischen dem Fahrzeugrad und dem Untergrund charakterisiert, das heißt angibt, beschreibt oder definiert. Die Erfindung nutzt dabei das Lenkmoment, mithin den Ist-Drehmomentwert und nutzt insbesondere dann, wenn das Fahrzeug ein vorzugsweise einspuriges Zweirad ist, wenigstens eine oder mehrere zweiradspezifische Eigenschaften. Die durch das erfindungsgemäße Verfahren ermittelte Größe kann beispielsweise wenigstens einer oder mehreren, anderen Funktionen des Fahrzeugs bereitgestellt werden, sodass beispielsweise die wenigstens eine, andere Funktion und somit beispielsweise die zuvor genannte Komponente in Abhängigkeit von der ermittelten Größe betrieben werden können. Insbesondere handelt es sich bei der Komponente beziehungsweise bei der Funktion um eine warnende und/oder eingreifenden Funktion, die beispielsweise zur Stabilisierung eines aktuellen Fahrzustands des Fahrzeugs verwendet wird. Eine Beispielsituation ist eine Fahrt auf einer Hausstrecke mit typischerweise immer vergleichbaren Schräglagenaufbau-/Verlauf bei Kurvenfahrt. Liegt an einem Tag ein verringerter Reibwert oder eine verringerte Reibwertklasse zwischen Reifen und Straße, mithin zwischen Fahrzeugrad und Untergrund, vor, ist es möglich, dass dieser Reibwert oder diese Reibwertklasse die üblicherweise gefahrenen Schräglagen nicht zulässt. Wird dieser insbesondere gegenüber einem üblichen Reibwert verringere Reibwert oder diese insbesondere gegenüber einer üblichen Reibwertklasse verringere Reibwertklasse erkannt, insbesondere mittels des Verfahrens, mittels welchem der verringerte Reibwert und/oder die verringerte Reibwertklasse als die Größe oder durch das Ermitteln der Größe ermittelt wird, kann beispielsweise die Fahrt des Fahrzeugs durch wenigstens ein insbesondere als Fahrerassistenzsystem ausgebildetes System des Fahrzeugs assistiert werden, beispielsweise durch Verringerung der Fahrgeschwindigkeit und/oder die Fahrerin oder der Fahrer des Fahrzeugs kann gewarnt werden, insbesondere indem ein haptisch und/oder optisch und/oder akustisch wahrnehmbares Hinweissignal ausgegeben wird, durch welches die Fahrerin oder der Fahrer die ermittelte Größe kommuniziert wird. Insbesondere wird beispielsweise das Hinweissignal mittels einer elektrisch betreibbaren und ganz insbesondere elektronischen Wiedergabeeinrichtung des Fahrzeugs ausgegeben. Somit kann es sich beispielsweise bei der Wiedergabeeinrichtung um die genannte Komponente handeln.

Im Folgenden wird das erfindungsgemäße Verfahren anhand eines Beispiels weiter erläutert: Der Fahrer oder die Fahrerin des beispielsweise als einspuriges Zweirad ausgebildeten Fahrzeugs stützt bei einer Kurvenfahrt, bei der das Fahrzeug durch eine Kurve gefahren und das erfindungsgemäße Verfahren durchgeführt wird, mit einem durch die Fahrerin beziehungsweise den Fahrer auf das Lenksystem (Lenkung) ausgeübten, auch als Fahrerlenkmoment bezeichneten Drehmoment, welches als das genannte Lenkmoment in dem Lenksystem wirkt beziehungsweise woraus das in der Lenkung wirkende Lenkmoment resultiert, eine Vielzahl von auf das Lenksystem (Lenkung) wirkenden Drehmomenten ab. Letztere können entweder direkt als Drehmoment wirken oder sich aus unter entsprechenden Hebelarmen wirkenden Kräften ergeben. Wird beispielsweise bei einer ersten Kurvenfahrt, bei der das vorzugsweise als einspuriges Zweirad ausgebildete Fahrzeug durch eine Kurve mit einer ersten Fahrgeschwindigkeit und einem ersten Rollwinkel gefahren, wobei beispielsweise die Reibung zwischen dem Fahrzeugrad und dem Untergrund, welcher die Kurve bildet, einen ersten Ist-Wert aufweist, und wird beispielsweise das Fahrzeug bei einer der ersten Kurvenfahrt zeitlich vorweggehenden oder sich an die erste Kurvenfahrt anschließenden, zweiten Kurvenfahrt durch dieselbe Kurve mit dem gleichen, ersten Rollwinkel und der gleichen, ersten Fahrgeschwindigkeit gefahren, während jedoch die Reibung zwischen dem Fahrzeugrad und dem Untergrund einen von dem ersten Ist-Wert unterschiedlichen, zweiten Ist-Wert aufweist, so muss die Fahrerin oder der Fahrer bei der zweiten Kurvenfahrt ein anderes Lenkmoment aufbringen und auf das Lenksystem ausüben als bei der ersten Kurvenfahrt, sodass das Lenkmoment bei der ersten Kurvenfahrt beispielsweise einen ersten Ist-Drehmomentwert und bei der zweiten Kurvenfahrt einen von dem ersten Ist-Drehmomentwert unterschiedlichen, zweiten Ist-Drehmomentwert aufweist. Mit anderen Worten nutzt die Erfindung aus, dass sich bei gleichem Rollwinkel und gleicher Fahrgeschwindigkeit, jedoch unterschiedlichen Reibwerten oder Ist-Werten der Reibung das Lenkmoment ändert oder ändern muss, da sich einzelne, am Lenksystem wirkende Drehmomente oder auch als Drehmoment- oder Lenkmomentanteile des Lenkmoments und dabei insbesondere das sogenannte Reifentorsionsmoment T_{z} bei unterschiedlichen Reibwerten ändern. Das Reifentorsionsmoment ergibt sich aufgrund einer Verformung des Reifens bei einer Fahrt des beispielsweise als insbesondere einspuriges Zweirad ausgebildeten Fahrzeugs in Schräglage, das heißt insbesondere dann, wenn der Rollwinkel beziehungsweise der Ist-Winkelwert von 0 unterschiedlich ist. Dieser Effekt, dass bei im Grunde gleicher Kurvenfahrt, jedoch mit oder auf unterschiedlichen Reibwerten, unterschiedliche Lenkmomente gestellt werden, mithin in dem Lenksystem wirken, wird bei dem als Reibwerterkennung oder Reibwertermittlung ausgebildeten, erfindungsgemäßen Verfahren genutzt, insbesondere dadurch, dass der Ist-Drehmomentwert ermittelt wird, beispielsweise dadurch, dass das Lenkmoment insbesondere mit einer Lenkmomentsensorik des Fahrzeugs gemessen, mithin erfasst, wird.

Grundlage der erfindungsgemäßen Reibwerterkennung ist das wenigstens eine Referenz-Kennfeld, welches auch als Lenkmomentkennfeld bezeichnet wird. Das Referenz-Kennfeld bildet beispielsweise für eine stationäre Kurven- oder Kreisfahrt auf bekanntem, beispielsweise als Hochreibwert ausgebildetem Reibwert in Form des Referenz-Reibwerts, für welchen das Referenz-Kennfeld ermittelt wurde, das zu stellende Lenkmoment in Form der Referenz-Drehmomentwerte über der Fahrgeschwindigkeit in Form der Referenz-Geschwindigkeitswerte und dem Rollwinkel in Form der Referenz-Winkelwerte ab. Das Referenz-Kennfeld kann beispielsweise ausgedrückt werden durch M_{KF_µ(v,φ)}, wobei mit v die Fahrgeschwindigkeit, mit φ der Rollwinkel und mit M_{KF_µ} das Lenkmoment bezeichnet ist. Das Referenz-Kennfeld kann beispielsweise in einem insbesondere elektrischen oder elektronischen Datenspeicher, insbesondere der elektronischen Recheneinrichtung, gespeichert sein. Das Referenz-Kennfeld kann beispielsweise aus Messsignalen, welche unter definierten Versuchsbedingungen wie beispielsweise bekanntem Reibwert, auch als Reifendruck bezeichnetem Druck im Reifen etc. für stationäre und/oder quasi-stationäre Kreis- oder Kurvenfahrten aufgenommen und/oder mithilfe einer validierten Simulationsumgebung bestimmt, insbesondere berechnet, werden.

Um die Größe und in der Folge die aktuelle, insbesondere maximal mögliche, Reibung zwischen dem Fahrzeugrad, insbesondere dessen Reifen, und dem Untergrund ermitteln zu können, ist es bei einer Ausführungsform der Erfindung vorgesehen, dass mittels der elektronischen Recheneinrichtung der Ist-Drehmomentwert ermittelt wird, indem mittels der elektronischen Recheneinrichtung wenigstens ein erster Ausgangswert ermittelt wird, welcher wenigstens einen in dem Lenksystem (Lenkung) wirkenden, dynamischen Lenkmomentenanteil und einen in der Lenkung wirkenden, stationären Lenkmomentenanteil charakterisiert. Somit ist oder beschreibt der erste Ausgangswert beispielsweise eine Summe aus dem wenigstens einen in der Lenkung wirkenden, dynamischen Lenkmomentenanteil und dem in der Lenkung wirkenden, stationären Lenkmomentenanteil. Insbesondere beschreibt oder charakterisiert der wenigstens eine erste Ausgangswert den stationären Lenkmomentenanteil und mehrere, insbesondere alle, in der Lenkung wirkenden, dynamischen Lenkmomentenanteile, insbesondere derart, dass der stationäre Lenkmomentenanteil und der wenigstens eine, dynamische Lenkmomentenanteil, insbesondere die dynamischen Lenkmomentenanteile, in Summe den ersten Ausgangswert ergeben. Außerdem wird beispielsweise mittels der elektronischen Recheneinrichtung der Ist-Drehmomentwert ermittelt, indem mittels der elektronischen Recheneinrichtung wenigstens ein zweiter Ausgangswert ermittelt wird, welcher bezogen auf den wenigstens einen in der Lenkung wirkenden, dynamischen Lenkmomentenanteil und denn in der Lenkung wirkenden, stationären Lenkmomentenanteil ausschließlich den wenigstens einen in der Lenkung wirkenden, dynamischen Lenkmomentenanteil charakterisiert. Um den Ist-Drehmomentwert zu ermitteln, wird mittels der elektronischen Recheneinrichtung der Ist-Drehmomentwert in Abhängigkeit von den Ausgangswerten ermittelt, insbesondere dadurch, dass der zweite Ausgangswert von dem ersten Ausgangswert subtrahiert wird.

Um aus den Ausgangswerten den Ist-Drehmomentwert und somit in der Folge die Größe besonders vorteilhaft ermitteln zu können, ist es in weiterer Ausgestaltung der Erfindung vorgesehen, dass der zweite Ausgangswert mittels der elektronischen Recheneinrichtung in Abhängigkeit von einer Drehzahl des Fahrzeugrads und/oder wenigstens eines weiteren Fahrzeugrads des Fahrzeugs und/oder in Abhängigkeit von einer Rollrate des Fahrzeugs und/oder in Abhängigkeit von einer Rollbeschleunigung des Fahrzeugs und/oder in Abhängigkeit von einer Gierbeschleunigung des Fahrzeugs und/oder in Abhängigkeit von einer Lenkwinkelrate des Fahrzeugs und/oder in Abhängigkeit von einer, insbesondere in Fahrzeuglängsrichtung des Fahrzeugs wirkenden, Verzögerung, mithin negativer Beschleunigung des Fahrzeugs und/oder in Abhängigkeit von einem Druck in wenigstens einer Radbremse des Fahrzeugs und/oder in Abhängigkeit von einem auch als Kreiseldrehmoment bezeichneten Kreiselmoment des Fahrzeugs berechnet wird. Beispielsweise wird die Drehzahl des Fahrzeugrads mittels eines Drehzahlsensors erfasst. Die Rollrate des Fahrzeugs ist die erste zeitliche Ableitung des Rollwinkels, und die Rollbeschleunigung des Fahrzeugs ist die zweite zeitliche Ableitung des Rollwinkels, mithin die erste zeitliche Ableitung der Rollrate. Die Gierbeschleunigung ist die erste Ableitung eines insbesondere um die Fahrzeughochrichtung des Fahrzeugs wirkenden Gierwinkels des Fahrzeugs. Die Verzögerung des Fahrzeugs resultiert beispielsweise aus einer Bremsung des Fahrzeugs. Die Radbremse ist beispielsweise dem Fahrzeugrad zugeordnet und dazu ausgebildet, das Fahrzeugrad und somit das Kraftfahrzeug abzubremsen. Somit ist die beispielsweise als Reibbremse ausgebildete Radbremse eine Betriebsbremse des Fahrzeugs.

Ein weiterer Hintergrund der Erfindung ist insbesondere, dass im realen Straßenverkehr stationäre Kurven- und/oder Kreisfahrten nur selten oder gar nicht vorkommen. Daher wird, um die Größe, insbesondere fortlaufend, zu ermitteln und somit beispielsweise eine, insbesondere fortlaufende, Reibwertklassifizierung/-erkennung durchzuführen, aus dem beispielsweise durch Messen, das heißt durch Erfassen ermittelten, ersten Ausgangswert der dynamische Lenkmomentenanteil herausgerechnet, insbesondere dadurch, dass der zweite Ausgangswert von dem ersten Ausgangswert subtrahiert wird. Insbesondere durch Subtrahieren des zweiten Ausgangswerts von dem ersten Ausgangswert wird ein Stationärwert ermittelt, insbesondere berechnet und ganz insbesondere geschätzt, wobei der Stationärwert bezogen auf den wenigstens einen dynamischen Lenkmomentenanteil und den wenigstens einen stationären Lenkmomentenanteil den stationäre Lenkmomentenanteil charakterisiert, das heißt beschreibt, angibt oder definiert. Der Stationärwert wird beispielsweise mit M_{stationär} bezeichnet, wobei beispielsweise der erste Ausgangswert mit Mₘₑₛₛ und der zweite Ausgangswert mit M_{dynamisch} bezeichnet werden. Somit ergibt sich beispielsweise M_{stationär} zu: M_{stationär} = Mₘₑₛₛ - M_{dynamisch}. Insbesondere ist, charakterisiert oder beschreibt M_{dynamisch}, mithin der zweite Ausgangswert, eine Summe einzelner, mehrerer dynamischer Lenkmomentenanteile. Beispielsweise wird das insbesondere aktuelle Lenkmoment mittels der Sensoreinrichtung erfasst, mithin gemessen, wodurch der erste Ausgangswert ermittelt wird. Hierfür stellt beispielsweise die Sensoreinrichtung ein insbesondere elektrisches Momentensignal bereit, welches das gemessene Lenkmoment und dabei beispielsweise den ersten Ausgangswert charakterisiert. Die elektronische Recheneinrichtung kann das Momentensignal empfangen und dadurch den ersten Ausgangswert ermitteln. Ferner ist es denkbar, dass die elektronische Recheneinrichtung das Momentensignal empfängt und aus dem oder in Abhängigkeit von dem Momentensignal den ersten Ausgangswert ermittelt. Beispielsweise ist das Momentensignal das Sensoreinrichtungssignal oder ein Teil des Sensoreinrichtungssignals oder ein weiteres Signal.

Der Ist-Drehmomentwert wird in Abhängigkeit von den Ausgangswerten ermittelt, beispielsweise, wie zuvor beschrieben, dadurch, dass der zweite Ausgangswert von dem ersten Ausgangswert subtrahiert wird. Beispielsweise wird der Stationärwert (M_{stationär}) als der Ist-Drehmomentwert verwendet, welcher mit dem für die insbesondere gemessene Fahrgeschwindigkeit und den insbesondere gemessenen, auch als Schräglagenwinkel bezeichneten Rollwinkel, mithin für den Ist-Geschwindigkeitswert und den Ist-Winkelwert aus dem Referenz-Kennfeld ausgelesenen Referenz-Drehmomentwert verglichen wird. Beispielsweise wird der Ist-Geschwindigkeitswert durch Messen der Fahrgeschwindigkeit ermittelt. Alternativ oder zusätzlich wird beispielsweise der Ist-Winkelwert durch Messen des Rollwinkels ermittelt. Beispielsweise können die Fahrgeschwindigkeit und/oder der Rollwinkel mittels der Sensoreinrichtung des Fahrzeugs gemessen werden.

Insbesondere wird bei dem oder durch den Vergleich des Referenz-Drehmomentwerts mit dem Ist-Drehmomentwert eine Differenz zwischen dem Referenz-Drehmomentwert und dem Ist-Drehmomentwert ermittelt, insbesondere berechnet. Ist die Differenz beispielsweise 0, so ist oder umfasst beispielsweise die Größe, insbesondere der Ist-Reibwert, der oder den Referenz-Reibwert, für welchen das Referenz-Kennfeld ermittelt wurde. Ist beispielsweise der Ist-Drehmomentwert größer als der Referenz-Drehmomentwert, und überschreitet dabei beispielsweise die Differenz einen beispielsweise vorgebbaren oder vorgegebenen Schwellenwert, so kann darauf rückgeschlossen werden, dass die Größe, insbesondere der Ist-Reibwert, geringer als der Referenz-Reibwert ist. Ist jedoch beispielsweise der Ist-Drehmomentwert kleiner als der Referenz-Drehmomentwert und überschreitet dabei beispielsweise die Differenz den Schwellenwert und/oder einen weiteren Schwellenwert, so kann darauf rückgeschlossen werden, dass die Größe, insbesondere der Ist-Reibwert, größer als der Referenz-Reibwert ist. Hierdurch kann der Ist-Reibwert vorteilhaft und insbesondere während einer Fahrt des Fahrzeugs ermittelt werden. Somit kann beispielsweise unter dem Referenz-Reibwert eine Referenzgröße verstanden werden, welche wenigstens einen Referenzwert und/oder wenigstens eine Referenzklasse umfassen kann, oder die Referenzgröße ist ein Referenzwert oder die Referenzgröße ist eine Referenzklasse.

Um die Größe besonders vorteilhaft ermitteln zu können, ist es in weiterer Ausgestaltung der Erfindung vorgesehen, dass mittels der Sensoreinrichtung des Fahrzeugs ein in der Lenkung wirkendes Drehmoment, insbesondere das Lenkmoment, erfasst wird, wobei der Ist-Drehmomentwert in Abhängigkeit von dem erfassten Drehmoment ermittelt wird. Wie zuvor bereits beschrieben, stellt beispielsweise die Sensoreinrichtung das insbesondere elektrische Momentensignal bereit, welches das mittels der Sensoreinrichtung erfasste, in der Lenkung wirkende Drehmoment, insbesondere Lenkmoment, charakterisiert. Die elektronische Recheneinrichtung empfängt beispielsweise das Momentensignal, wobei die elektronische Recheneinrichtung in Abhängigkeit von dem empfangenen Momentensignal den Ist-Drehmomentwert ermittelt, insbesondere berechnet. Hierdurch kann der Ist-Drehmomentwert besonders vorteilhaft ermittelt werden, sodass in der Folge die Größe besonders vorteilhaft ermittelt werden kann.

Um die Größe besonders vorteilhaft ermitteln zu können, ist es in weiterer Ausgestaltung der Erfindung vorgesehen, dass, insbesondere mittels der elektronischen Recheneinrichtung, der erste Ausgangswert in Abhängigkeit von dem mittels der Sensoreinrichtung erfassten Drehmoment ermittelt wird. Beispielsweise charakterisiert der erste Ausgangswert das mittels der Sensoreinrichtung erfasste Drehmoment, insbesondere beispielsweise derart, dass das Momentensignal den ersten Ausgangswert umfasst. Somit ermittelt beispielsweise die elektronische Recheneinrichtung dadurch, dass die elektronische Recheneinrichtung das Momentensignal empfängt, den ersten Ausgangswert. Ferner ist es denkbar, dass die elektronische Recheneinrichtung das Momentensignal empfängt und in Abhängigkeit von dem Momentensignal den ersten Ausgangswert ermittelt. Der Ist-Drehmomentwert wird beispielsweise derart aus den Ausgangswerten ermittelt, insbesondere berechnet und somit beispielsweise geschätzt, dass der zweite Ausgangswert von dem ersten Ausgangswert subtrahiert wird, wodurch der Ist-Drehmomentwert und die Größe besonders vorteilhaft ermittelt werden können.

M_{dynamisch}, mithin der zweite Ausgangswert, setzt sich beispielsweise aus einzelnen, mehreren dynamischen Lenkmomentenanteilen zusammen. Mit anderen Worten charakterisiert oder beschreibt beispielsweise der zweite Ausgangswert mehrere, dynamische Lenkmomentenanteile. Die dynamischen Lenkmomentenanteile werden beispielsweise in Abhängigkeit von insbesondere gemessenen Fahrdynamikgrößen wie Raddrehzahl, Rollrate, Rollbeschleunigung, Gierbeschleunigung, Lenkwinkelrate, Verzögerung, Radbremsdruck etc. und beispielsweise in Abhängigkeit von insbesondere bekannten Fahrzeugparametern wie Massenträgheit des beispielsweise als Vorderrad ausgebildeten Fahrzeugrads, Lenkkopfwinkel etc. berechnet. Die insbesondere gemessenen Fahrdynamikgrößen werden beispielsweise abhängig von ihrer jeweiligen Signalqualität vorab entsprechend gefiltert. Ferner ist es denkbar, dass das mittels der Sensoreinrichtung gemessene Drehmoment, insbesondere Lenkmoment, gefiltert wird, sodass der Ist-Drehmomentwert in Abhängigkeit von dem gefilterten Drehmoment, insbesondere Lenkmoment, ermittelt wird.

Ein wesentlicher der dynamischen Lenkmomentenanteile kann beispielsweise das bei einer auch mit *φ̇* bezeichnete Rollrate des Fahrzeugs auftretende und abzustützende Kreiselmoment M_{dyn_gyro} des sich mit der Raddrehzahl ω_{VR} drehenden Fahrzeugrads sein, wobei sich das Kreiselmoment M_{dyn_gyro} wie folgt berechnet:
M_{dyn_gyro} = J_{VR} * cos(ε) * ω_{VR} * *φ̇.* Dabei bezeichnet J_{VR} die Massenträgheit des beispielsweise als Vorderrad ausgebildeten Fahrzeugrads, und ε bezeichnet den dynamischen Lenkkopfwinkel. Steht beispielsweise ein Lenkwinkel- oder Lenkratensensor zur Verfügung, mittels welchem ein Lenkwinkel des Fahrzeugs oder die Lenkwinkelrate erfasst werden kann, so kann abhängig von der mit *δ̇* bezeichnete Lenkwinkelrate auch ein aus der Lenkwinkelrate resultierender, dynamischer Lenkmomentenanteil M_{dyn_ddelta} wie folgt berechnet werden: M_{dyn_ddelta} = k_{δ.} * *δ̇*. Der genannte Lenkwinkel ist ein Winkel, um welchen das Lenkelement und mit diesem das Fahrzeugrad um die Schwenkachse, insbesondere aktuell, verschwenkt, mithin gelenkt ist. Die Lenkwinkelrate ist die erste zeitliche Ableitung des Lenkwinkels. Dabei bezeichnet k_{δ}. eine auch als Lenkungsdämpfung bezeichnete Dämpfung der Lenkung. Der dynamische Momentenanteil M_{dyn_ddelta} ist üblicherweise sehr gering, sodass dieser nicht notwendigerweise berechnet werden muss. Hinzu können weitere dynamische Anteile zum Beispiel durch die Rollbeschleunigung, die Gierbeschleunigung und die beispielsweise als Längsverzögerung ausgebildete, mithin in Fahrzeuglängsrichtung des Fahrzeugs wirkende Verzögerung des Fahrzeugs etc. kommen, die beispielsweise weitere dynamische Lenkmomentenanteile bewirken können.

Einer der dynamischen Lenkmomentenanteile kann ferner ein Lenkmomentenanteil sein, welcher aus der mit *φ̈* bezeichneten Rollbeschleunigung des Fahrzeugs resultiert und mit M_{dyn_ddphi} bezeichnet wird. Dieser dynamische, durch die Rollbeschleunigung bewirkte Lenkmomentenanteil M_{dyn_ddphi} ist beispielsweise gegeben durch folgenden linearen Zusammenhang: M_{dyn_ddphi} = k_{ddphi} * *φ̈*. Dabei hängt k_{ddphi} von dem dynamischen Lenkkopfwinkel und Fahrzeugparametern und/oder geometrischen Größen ab. Ein weiterer dynamischer Lenkmomentenanteil kann insbesondere ein dynamisches Bremslenkmoment M_{dyn_brems} sein. Ein einfacher Ansatz zur Berücksichtigung des Bremslenkmoments M_{dyn_brems} ist gegeben durch: M_{dyn_brems} = k_{brems} * sin(φ) * p_{VR}. Dabei bezeichnet p_{VR} den Druck in der zum Abbremsen des Fahrzeugrads ausgebildeten und somit dem Fahrzeugrad zugeordneten Radbremse, wobei der auch als Radbremsdruck oder Bremsdruck bezeichnete Druck in der dem Fahrzeugrad zugeordneten Bremse von dem dynamischen Lenkkopfwinkel und Fahrzeugparametern und/oder geometrischen Größen abhängt.

Um den Ist-Drehmomentwert und somit die Größe besonders vorteilhaft ermitteln zu können, kann ferner vorgesehen sein, dass der Ist-Drehmomentwert in Abhängigkeit von wenigstens einem oder mehreren Korrekturtermen Mₖₒᵣᵣ ermittelt, insbesondere berechnet, wird. Dabei ist es beispielsweise denkbar, dass der Stationärwert Mₛₜₐₜᵢₒₙ in Abhängigkeit von dem beispielsweise als Messwert ausgebildeten und insbesondere durch Messen des Drehmoments, insbesondere des Lenkmoments, ermittelten, ersten Ausgangswert und in Abhängigkeit von dem zweiten Ausgangswert ermittelt, insbesondere berechnet, wird, beispielsweise dadurch, dass der zweite Ausgangswert (M_{dynamisch}) und der wenigstens eine Korrekturterm Mₖₒᵣᵣ von dem ersten Ausgangswert subtrahiert werden. Da der erste Ausgangswert beispielsweise dadurch ermittelt wird, dass die Sensoreinrichtung das in der Lenkung wirkende Drehmoment, insbesondere Lenkmoment, misst, ist beispielsweise der erste Ausgangswert ein Messwert, der das gemessene Drehmoment und somit das Momentensignal charakterisiert und dabei beispielsweise Bestandteil des Momentensignals ist. Der Korrekturterm Mₖₒᵣᵣ ist beispielsweise ein auch als Korrekturwert bezeichnetes Korrekturdrehmoment, welches, insbesondere zusätzlich zu dem zweiten Ausgangswert, von dem ersten Ausgangswert (Mₘₑₛₛ) subtrahiert wird. Somit ergibt sich beispielsweise der Ist-Drehmomentwert beziehungsweise Mₛₜₐₜᵢₒₙ zu: Mₛₜₐₜᵢₒₙ = Mₘₑₛₛ - M_{dynamisch} - Mₖₒᵣᵣ. Der Korrekturterm Mₖₒᵣᵣ ist beispielsweise ein einfacher linearer Korrekturterm in Form von M_{korr_x} = kₓ * x. Der beispielsweise als linearer Korrekturterm ausgebildete Korrekturterm Mₖₒᵣᵣ ist beispielsweise abhängig von einer mit x bezeichneten und beispielsweise gemessenen Fahrdynamikgröße, insbesondere von einer der zuvor genannten Fahrdynamikgrößen, die mit x bezeichnet ist. Alternativ oder zusätzlich ist beispielsweise der insbesondere lineare Korrekturterm Mₖₒᵣᵣ ein geschwindigkeitsabhängiger Korrekturterm in Form von M_{korr_v_x} = k_{v_x} * v * x.

Die Sensoreinrichtung zum Erfassen der Messgröße ist oder umfasst beispielsweise wenigstens einen Sensor, mittels welchem die Messgröße beziehungsweise die Relativposition erfasst wird. Beispielsweise handelt es sich bei dem Sensor um einen Kraft- und/oder Drucksensor. Mittels des Sensors kann beispielsweise eine insbesondere durch die Person bewirkte Belastung der Sitzanlage erfasst werden, wobei durch das Erfassen der Belastung der Sitzanlage die Relativposition vorteilhaft erfasst werden kann. Insbesondere kann vorgesehen sein, dass der Positionswert die Belastung der Sitzanlage ist oder charakterisiert.

Grundsätzlich ist das erfindungsgemäße Verfahren für eine normale, auch als Straßenfahrt bezeichnete, Fahrt entlang einer beispielsweise als Straße ausgebildeten Fahrbahn gedacht, bei der ausgeprägte hängende oder drückende Fahrstile nicht üblich sind. Für Fahrer oder Fahrerinnen, die solche Fahrstile fahren, ist es jedoch vorteilhaft, die Position der Fahrerin oder des Fahrers relativ zu dem Fahrzeug und somit beispielsweise eine Oberkörperbewegung und/oder Oberkörperposition der das Fahrzeug nutzenden Person und/oder eine Gewichtsverlagerung der das Fahrzeug nutzenden Person zu erfassen und zu berücksichtigen, insbesondere derart, dass der beispielsweise mit M_{Fahrer} bezeichnete Einflusswert herausgerechnet wird. Dies erfolgt beispielsweise derart, dass der Einflusswert M_{Fahrer} von dem ersten Ausgangswert subtrahiert wird. Der mit M_{Fahrer} bezeichnete Einflusswert ist, beschreibt oder definiert somit einen Einfluss der Position und somit beispielsweise einer Bewegung der das Fahrzeug nutzenden Person auf das Lenkmoment. Somit ergibt sich beispielsweise das Stationärmoment M_{stationär} zu: M_{stationär} = erster Ausgangswert (Mₘₑₛₛ) - M_{dynamisch} - M_{Fahrer}.

Wie oben beschrieben, kann beispielsweise von dem ersten Ausgangswert zusätzlich Mₖₒᵣᵣ subtrahiert werden. Hierdurch können der Ist-Drehmomentwert und in der Folge die Größe besonders vorteilhaft ermittelt werden.

Für hochdynamische Fahrsituationen, in denen eine besonders hohe Genauigkeit einer Ermittlung, insbesondere Schätzung, des stationären Lenkmomentenanteils, mithin des Stationärwerts M_{stationär} nicht unbedingt und ohne Weiteres realisiert werden kann, kann beispielsweise die Reibwerterkennung zeitweise ausgesetzt werden, insbesondere bis über eine Fahrsituationsklassifizierung wieder ein für die Reibwerterkennung geeigneter Fahrzustand des Fahrzeugs erkannt wird. Zur Fahrsituationsklassifizierung, welche zum Beispiel über ein schwellenwertbasiertes Verfahren realisiert werden kann, werden die gemessenen Fahrdynamiksignale beziehungsweise Fahrdynamikgrößen genutzt. Beispielsweise kann bei einer Geradeausfahrt des Fahrzeugs sowie gegebenenfalls bei nur sehr kleinen Schräglagen beziehungsweise Rollwinkeln unterhalb einer Grenze die Reibwerterkennung ausgesetzt werden. Das Verfahren wurde auch beschrieben im Zusammenhang mit einer das Fahrzeug nutzenden Person wie beispielsweise der Fahrerin oder dem Fahrer, die beziehungsweise der das Fahrzeug fährt und somit steuert. Das erfindungsgemäße Verfahren lässt sich jedoch auch auf autonome Fahrzeuge wie beispielsweise autonome, insbesondere einspurige, Zweiräder, bei welchen das Lenkmoment und somit beispielsweise der erste Ausgangswert Mₘₑₛₛ ausschließlich, insbesondere automatisch, durch ein System des Fahrzeugs gestellt wird, und/oder für assistierte und/oder teilautonome Fahrzeuge, bei welchen das Lenkmoment aus einem durch ein System des Fahrzeugs gestellten Lenkmoment und einem durch eine Person gestellten Lenkmoment zusammensetzt, anwenden.

Schließlich hat es sich als besonders vorteilhaft gezeigt, wenn das Fahrzeug als ein einspuriges Zweirad, insbesondere als ein einspuriges Kraftrad beziehungsweise Motorrad, ausgebildet ist. Insbesondere bei einem solchen einspurigen Zweirad kann durch das Verfahren der Ist-Drehmomentwert und in der Folge die Größe besonders vorteilhaft ermittelt werden.

Ein zweiter Aspekt der Erfindung betrifft ein Fahrzeug, welches zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ferner ist beispielsweise die Verwendung eines insbesondere zusätzlich zu dem Referenz-Kennfeld vorgesehenen, zweiten Referenz-Kennfelds denkbar. Hierbei wird beispielsweise in Abhängigkeit von dem Ist-Wertepaar aus dem für einen von dem Referenz-Reibwert unterschiedlichen, zweiten Referenz-Reibwert ermittelten, zweiten Referenz-Kennfeld, welches mehrere, zweite Referenz-Winkelwerte, mehrere, zweite Referenz-Geschwindigkeitswerte und mehrere, zweite Referenz-Drehmomentwerte umfasst und einem jeweiligen, zweiten Referenz-Wertepaar, welches genau einen der zweiten Referenz-Winkelwerte und genau einen der zweiten Referenz-Geschwindigkeitswerte umfasst, genau einen der zweiten Referenz-Drehmomente zuordnet, eines der zweiten Referenz-Wertepaare als zu dem Ist-Wertepaar gehörendes, zweites Wertepaar ausgewählt wird. Dies erfolgt beispielsweise mittels der elektronischen Recheneinrichtung. Mittels der elektronischen Recheneinrichtung wird der dem ausgewählten, zweiten Referenz-Wertepaar zugeordnete, zweite Referenz-Drehmomentwert ermittelt. Mittels der elektronischen Recheneinrichtung wird der ermittelte, zweite Referenz-Drehmomentwert mit dem ermittelten Ist-Drehmomentwert verglichen. Dabei wird die Größe in Abhängigkeit von dem Vergleich des zweiten Referenz-Drehmomentwerts mit dem Ist-Drehmomentwert ermittelt. Liegt beispielsweise der Ist-Drehmomentwert zwischen dem ersten Referenz-Drehmomentwert und dem zweiten Referenz-Drehmomentwert, so wird beispielsweise die Größe, insbesondere durch Interpolation, aus dem ersten Referenz-Reibewert und dem zweiten Referenz-Reibwert ermittelt, insbesondere berechnet und somit beispielsweise geschätzt. Somit kann beispielsweise auf den aktuellen Ist-Reibwert beziehungsweise die aktuelle Reibung, insbesondere auf die Größe, zum Beispiel durch Interpolation zwischen den zwei nächstgelegenen Reibwerten ermittelt werden. Dies bedeutet beispielsweise, dass diejenigen, aus den Referenz-Kennfeldern ausgelesenen Referenz-Drehmomentwerte ausgewählt werden, insbesondere die zwei aus den Referenz-Kennfeldern ausgelesenen Referenz-Drehmomente ausgewählt werden, die dem Ist-Drehmomentwert am nächsten liegen, insbesondere derart, dass der Ist-Drehmomentwert zwischen den ausgewählten Referenz-Drehmomentwerten liegt. Dabei wird beispielsweise die Größe beziehungsweise der Ist-Reibwert insbesondere durch Interpolation aus den Referenz-Reibewerten ermittelt, für die die Referenz-Kennfelder ermittelt wurden, aus denen die nächstgelegenen Referenz-Drehmomentwerte ausgelesen wurden.

Weitere Einzelheiten der Erfindung ergeben sich aus der nachfolgenden Beschreibung eines bevorzugten Ausführungsbeispiels mit den zugehörigen Zeichnungen. Dabei zeigt:
- Fig. 1: eine schematische Seitenansicht eines als einspuriges Zweirad ausgebildeten Fahrzeugs; und
- Fig. 2: eine schematische Vorderansicht einer das Fahrzeug nutzenden Person.

In den Figuren sind gleiche oder funktionsgleiche Elemente mit gleichen Bezugszeichen versehen.

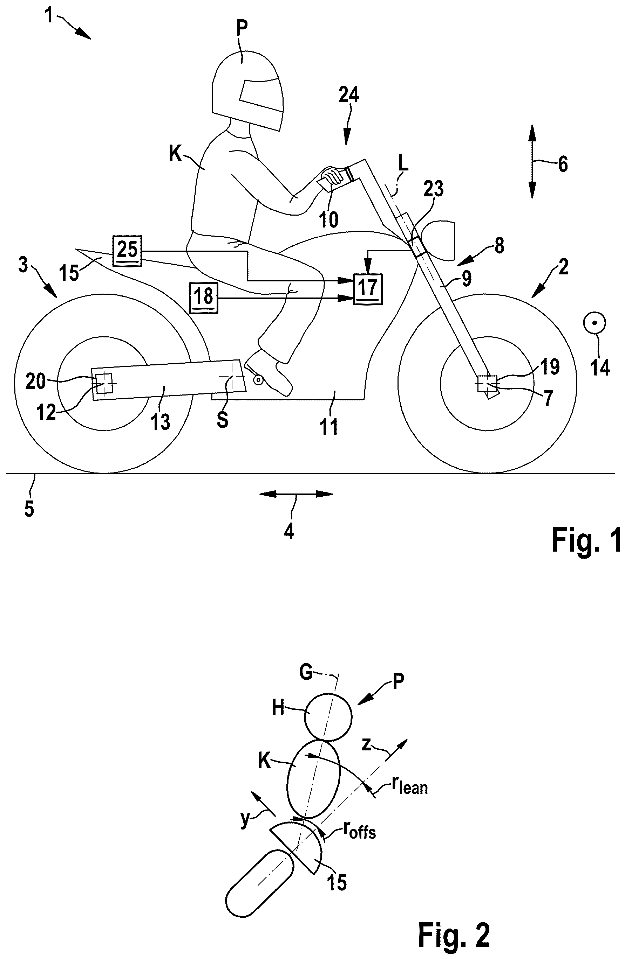

Fig. 1 zeigt in einer schematischen Seitenansicht ein vorliegend als einspuriges Zweirad ausgebildetes Fahrzeug 1, welches bei dem in Fig. 1 gezeigten Ausführungsbeispiel als einspuriges Kraftrad, insbesondere als einspuriges Motorrad, ausgebildet ist. Das Fahrzeug 1 weist genau zwei Fahrzeugräder auf, nämlich ein erstes Fahrzeugrad 2 und ein zweites Fahrzeugrad 3. Die Fahrzeugräder 2 und 3 sind in Fahrzeuglängsrichtung des Fahrzeugs 1 hintereinander und somit aufeinanderfolgend angeordnet. Die Fahrzeuglängsrichtung ist durch einen Doppelpfeil 4 veranschaulicht. Bei dem in Fig. 1 gezeigten Ausführungsbeispiel ist das Fahrzeugrad 2 ein Vorderrad, und das Fahrzeugrad 3 ist ein Hinterrad. Die Fahrzeugräder 2 und 3 werden auch als Räder bezeichnet. Die Fahrzeugräder 2 und 3 sind Bodenkontaktelemente des Fahrzeugs 1, welches über die Bodenkontaktelemente in Fahrzeughochrichtung des Fahrzeugs 1 nach unten hin an einem auch als Boden bezeichneten oder einen Boden bildenden Untergrund 5 abstützbar oder abgestützt ist. Anhand von Fig. 1 und Fig. 2 wird im Folgenden ein Verfahren beschrieben, welches während einer Fahrt des Fahrzeugs 2, welches als Kraftfahrzeug ausgebildet ist, durchgeführt wird. Bei der Fahrt und somit bei dem Verfahren wird das Fahrzeug 2 entlang des Bodens (Untergrund 5) gefahren, während die Bodenkontaktelemente in Fahrzeughochrichtung des Fahrzeugs 1 nach unten hin an dem Boden direkt abgestützt sind, sodass die Fahrzeugräder 2 und 3 direkt an dem Boden (Untergrund 5) abrollen. Die Fahrzeughochrichtung des Fahrzeugs 1 ist durch einen Doppelpfeil 6 veranschaulicht. Wird somit das Fahrzeug 1 entlang des Bodens gefahren, während das Fahrzeug 1 in Fahrzeughochrichtung des Fahrzeugs 1 nach unten hin über die Bodenkontaktelemente an dem Boden abgestützt ist, so rollen die Bodenkontaktelemente, insbesondere direkt, an dem Boden ab. Das Fahrzeugrad 2 ist um eine Raddrehachse 7 relativ zu einem Lenkelement 8 des Fahrzeugs 1 drehbar an dem Lenkelement 8 gehalten. Das Lenkelement 8 umfasst eine Lenkgabel 9 und einen Griff 10 und ist um eine auch als Lenkachse L bezeichnete Schwenkachse relativ zu einem beispielsweise als Rahmen 11 ausgebildeten Fahrgestell des Fahrzeugs 1 verschwenkbar an dem Rahmen 11 gehalten. Beispielsweise ist der Griff 10 ein Lenker, oder der Griff 10 ist durch einen Lenker des Lenkelements 8 gebildet. Somit sind das Lenkelement 8 und mit diesem das Fahrzeugrad 2 um die Lenkachse L relativ zu dem Rahmen 11 verschwenkbar und somit lenkbar, das heißt zu lenken. Hierdurch können beispielsweise Kurvenfahrten, Fahrtrichtungsänderungen und Fahrbahn- oder Fahrspurwechsel des Fahrzeugs 1 bewirkt werden, insbesondere von einer das Fahrzeug 1, insbesondere aktuell, nutzenden Person P, wie beispielsweise eine Fahrerin oder ein Fahrer des als Kraftfahrzeug ausgebildeten Fahrzeugs 1 ist. Das Fahrzeugrad 3 ist um eine zweite Raddrehachse 12 relativ zu einer auch als Hinterradschwinge bezeichneten Schwinge 13 des Fahrzeugs 1 drehbar an der Schwinge 13 gehalten. Die Schwinge 13 ist ihrerseits um eine Schwenkachse S relativ zu dem Rahmen 11 verschwenkbar an dem Rahmen 11 gehalten, sodass die Schwinge 13 und das Fahrzeugrad 3 um die Schwenkachse S relativ zu dem Rahmen 11 verschwenkbar an dem Rahmen 11 gehalten sind. Bei einer Geradeausfahrt des Fahrzeugs 1, welches bei seiner Geradeausfahrt in Fahrzeuglängsrichtung insbesondere nach vorne und dabei insbesondere entlang einer Gerade fährt, verlaufen die Raddrehachsen 7 und 12 parallel zueinander. Außerdem verläuft beispielsweise die Schwenkachse S in Fahrzeugquerrichtung des Fahrzeugs 1, dessen Fahrzeugquerrichtung durch einen Doppelpfeil 14 veranschaulicht ist und senkrecht zur Bildebene von Fig. 1 verläuft. Erkennbar ist, dass die Fahrzeughochrichtung, die Fahrzeugquerrichtung und die Fahrzeuglängsrichtung paarweise senkrecht zueinander verlaufen. Die Fahrzeugquerrichtung wird auch als y-Richtung bezeichnet, die Fahrzeughochrichtung wird auch als z-Richtung bezeichnet, und die Fahrzeuglängsrichtung wird auch als x-Richtung bezeichnet. Die Fahrzeugquerrichtung und die Fahrzeughochrichtung spannen eine auch als y-z-Ebene bezeichnete Ebene auf, welche senkrecht zur Bildebene von Fig. 1 verläuft. Die Fahrzeughochrichtung wird auch als Hochachse oder Fahrzeughochachse bezeichnet und verläuft entlang einer gedachten Geraden, wobei beispielsweise die Fahrzeughochrichtung durch den auch als Schwerpunkt bezeichneten Massenschwerpunkt des Fahrzeugs 1 hindurchverläuft.

Das Fahrzeug 1 weist einen beispielsweise an dem Rahmen 11 gehaltenen Sitz 15 auf, welcher auch als Sitzanlage des Fahrzeugs 1 bezeichnet wird. Der Sitz 15 stellt wenigstens oder genau einen Sitzplatz auf, auf welchem die das Fahrzeug 1 aktuell nutzende Person P aktuell sitzt. Somit sitzt die das Fahrzeug 1 aktuell nutzende Person P auf dem Sitz 15 und somit auf dem Fahrzeug 1, insbesondere in einem sogenannten Aufsitzpunkt. Hierunter ist insbesondere zu verstehen, dass beispielsweise die Person P insbesondere mit ihrem Gesäß den Sitz 15 in dem Aufsitzpunkt berührt.

Das Lenkelement 8 und somit der Griff 10 sind Bestandteile einer auch Lenksystem bezeichneten Lenkung 24 des Fahrzeugs 1, welches mittels der Lenkung 24 gelenkt werden kann. Die auf dem Sitz 15 sitzende Person P kann mit ihren Händen den Griff 10 ergreifen, insbesondere umgreifen, sodass die Person P über ihre Hände und somit über ihre Arme, die die Hände der Person P umfassen, eine Kraft oder ein Drehmoment auf den Griff 10 und somit das Lenkelement 8 und die Lenkung 24 insgesamt ausüben kann. Hieraus resultiert ein auch als Personenmoment bezeichnetes und insbesondere um die Lenkachse L herumwirkendes Personendrehmoment, durch welches Lenkelement 8, insbesondere die Lenkung 24, und das Fahrzeugrad 2 um die Lenkachse L relativ zu dem Rahmen 11 verschwenkt werden können, um dadurch das Fahrzeug 1 zu lenken. Hierdurch kann die Person P Kurvenfahrten, Fahrtrichtungsänderungen und Fahrspurwechsel des Fahrzeugs 1 bewirken, mithin das Fahrzeug 1 lenken. Wieder mit anderen Worten ausgedrückt sind zum Lenken des Fahrzeugs 1 das Lenkelement 8, insbesondere die Lenkung 24, und mit dem Lenkelement 8 das Fahrzeugrad 2 um die Lenkachse L relativ zu dem Rahmen 11 verschwenkbar.

Das Fahrzeug 1 weist eine auch als Steuergerät bezeichnete, elektronische Recheneinrichtung 17 auf, mittels welcher das Verfahren durchgeführt wird.

Das Fahrzeug 1 weist beispielsweise eine Erfassungseinrichtung 18, welche beispielsweise eine Messtechnik ist oder umfasst. Mittels der Erfassungseinrichtung 18 sind beispielsweise Beschleunigungen des Fahrzeugs 1 und dabei beispielsweise in Fahrzeugquerrichtung und/oder in Fahrzeuglängsrichtung und/oder in Fahrzeughochrichtung verlaufende Beschleunigungen des Fahrzeugs 1 erfassbar. Ferner kann beispielsweise mittels der Erfassungseinrichtung 18 ein Rollwinkel des Fahrzeugs 1 erfasst werden. Ferner ist es denkbar, dass mittels der Erfassungseinrichtung 18 eine Rollrate als zeitliche Ableitung des Rollwinkels und/oder eine Rollbeschleunigung als zweite zeitliche Ableitung des Rollwinkels, mithin als erste zeitliche Ableitung der Rollrate, und/oder eine Gierbeschleunigung des Fahrzeugs 1 erfasst werden können.

Das Fahrzeug 1 weist einen dem Fahrzeugrad 2 zugeordneten und einfach auch als Drehzahlsensor bezeichneten Radardrehzahlsensor 19 auf, mittels welchem eine Drehzahl des Fahrzeugrads 2 um die Raddrehachse 7 erfasst werden kann. Des Weiteren weist das Fahrzeug 1 einen einfach auch als Drehzahlsensor bezeichneten, dem Fahrzeugrad 3 zugeordneten Radardrehzahlsensor 20 auf, mittels welchem eine Drehzahl des Fahrzeugrads 3 um die Raddrehachse 12 erfasst werden kann. Dem jeweiligen Fahrzeugrad 2, 3 ist beispielsweise eine jeweilige Radbremse zugeordnet. Die jeweilige Radbremse kann eine Reibbremse sein. Insbesondere kann die jeweilige Radbremse als eine jeweilige Scheibenbremse ausgebildet sein. Vorzugsweise ist die jeweilige Radbremse eine Betriebsbremse des Fahrzeugs 1, welches mittels der jeweiligen Betriebsbremse abgebremst werden kann. Dabei kann das Fahrzeug 1 beispielsweise einen Bremsdrucksensor aufweisen, der der dem Fahrzeugrad 2 zugeordneten Radbremse zugeordnet ist. Die dem Fahrzeugrad 2 zugeordnete Radbremse wird auch als erste Radbremse bezeichnet, wobei mittels des zuvor genannten, auch als erster Bremsdrucksensor bezeichneten Bremsdrucksensors ein einfach auch als erster Druck bezeichneter, erster Bremsdruck in der ersten Radbremse erfasst werden kann. Das Fahrzeug 1 kann ferner einen zweiten Bremsdrucksensor aufweisen, welcher der dem Fahrzeugrad 3 zugeordneten, auch als zweite Radbremse bezeichneten Radbremse zugeordnet ist. Mittels des zweiten Bremsdrucksensors kann ein einfach auch als zweiter Druck bezeichneter Bremsdruck in der zweiten Radbremse erfasst werden. Ferner weist das Fahrzeug 1 beispielsweise einen Lenkmomentsensor 23 auf, mittels welchem ein insbesondere aktuell um die Lenkachse L wirkendes Lenkmoment in der Lenkung 24 erfasst werden kann. Das Lenkmoment ist ein in der Lenkung 24 (Lenksystem) wirkendes Drehmoment, welches mittels des Lenkmomentsensors 23 erfasst werden kann. Durch um die Lenkachse L und relativ zu dem Rahmen 11 erfolgendes Verschwenken und somit Lenken des Lenkelements 8 und des Fahrzeugrads 2, mithin der Lenkung 24 kann ein insbesondere um die Lenkachse L verlaufender Lenkwinkel eingestellt, das heißt variiert werden. Optional kann das Fahrzeug 1 einen Lenkwinkelsensor aufweisen, mittels welchem der insbesondere um die Lenkachse L verlaufende Lenkwinkel, das heißt ein jeweiliger Wert des Lenkwinkels, erfasst werden kann. Zum Bewirken der Geradeausfahrt des Fahrzeugs 1 befinden sich das Lenkelement 8 und somit die Lenkung 24 in einer Geradeausstellung, in welcher der Lenkwinkel 0 Grad beträgt. Optional kann das Fahrzeug 1 einen Lenkratensensor, mittels welchem eine Lenkrate des Lenkelements 8 beziehungsweise der Lenkung 24 erfasst werden kann. Insbesondere die Lenkrate eine zeitliche Ableitung des Lenkwinkels.

Die das Fahrzeug 1 insbesondere aktuell und ganz insbesondere während des Verfahrens nutzende Person P, deren Oberkörper mit K bezeichnet wird, ist in Fig. 1 schematisch in einer Vorderansicht gezeigt. Insbesondere zeigt Fig. 2 die Person P während einer Kurvenfahrt des Fahrzeugs 1, das heißt während die Person P das Fahrzeug 1 durch eine Kurve hindurchfährt, sodass das Fahrzeug 1 der Kurve folgt und somit eine Kurvenfahrt ausführt. Insbesondere führt das Fahrzeug 1 die Kurvenfahrt während des Verfahrens aus. Der Kopf der Person P ist mit H bezeichnet.

Ein in der y-z-Ebene verlaufender Winkel, den der Oberkörper K der Person P mit der auch als Hochachse oder Fahrzeughochachse bezeichneten Fahrzeughochrichtung z in der y-z-Ebene betrachtet einschließt, ist mit rₗₑₐₙ bezeichnet. Insbesondere schließt eine gedachte, durch den Mittelpunkt des Körpers K hindurchverlaufende und/oder durch einen Körperschwerpunkt der Person P hindurchverlaufende und/oder den Oberkörper K in der y-z-Ebene betrachtet in zwei gleiche Hälften teilende Gerade den Winkel rₗₑₐₙ mit der Fahrzeughochrichtung ein.

Ist der Oberkörper K in der y-z-Ebene betrachtet und somit in Fahrzeugquerrichtung des Fahrzeugs 1 nicht gegenüber der Fahrzeughochrichtung geneigt, sodass die genannte, in Fig. 2 mit G bezeichnete Gerade mit der Fahrzeughochrichtung z zusammenfällt, so beträgt der, insbesondere relative, Winkel rₗₑₐₙ null. Vorliegend ist der Oberkörper K, mithin die Gerade G, in der y-z-Ebene betrachtet und somit in Fahrzeugquerrichtung gegenüber der Fahrzeughochrichtung z geneigt, sodass der Winkel rₗₑₐₙ einen von null unterschiedlichen Wert aufweist.

Ein seitlicher, das heißt in Fahrzeugquerrichtung des Fahrzeugs 1 und somit in der y-z-Ebene verlaufender Versatz zwischen dem Aufsitzpunkt und der vorzugsweise durch den auch als Schwerpunkt bezeichneten Massenschwerpunkt des Fahrzeugs 1 hindurchverlaufenden Fahrzeughochrichtung z und somit ein in der y-z-Ebene verlaufender und somit in Fahrzeugquerrichtung verlaufender Versatz zwischen dem Aufsitzpunkt und dem Schwerpunkt des Fahrzeugs 1 ist mit r_{offs} bezeichnet. Liegt der Aufsitzpunkt auf der Fahrzeughochrichtung z, so ist der seitliche Versatz r_{offs} null. Vorliegend ist der Aufsitzpunkt in Fahrzeugquerrichtung und somit in der y-z-Ebene betrachtet von dem Schwerpunkt des Fahrzeugs 1, mithin von der Fahrzeughochrichtung z versetzt, sodass der seitliche Versatz r_{offs} einen von null unterschiedlichen Wert aufweist.

Bei dem zuvor genannten Verfahren wird ein Einfluss, mithin eine Wirkung einer Relativposition zwischen dem Fahrzeug 2 und der das Fahrzeug 2 aktuell nutzenden Person P auf das aktuell in der Lenkung 24 wirkende Lenkmoment insbesondere mittels der elektronischen Recheneinrichtung 17 ermittelt. Die Relativposition ist eine Sitzposition der Person P, die aktuell in der Sitzposition auf dem Sitz 15 sitzt. Sind rₗₑₐₙ und r_{offs} gleichzeitig null, so die aktuelle Sitzposition der aktuell auf dem Sitz 15 sitzenden und das Fahrzeug 2 aktuell nutzenden Person P eine sogenannte neutrale Sitzposition. Weist rₗₑₐₙ einen von null unterschiedlichen Wert auf und/oder weist gleichzeitig r_{offs} einen von null unterschiedlichen Wert auf, so ist die Relativposition zwischen dem Fahrzeug 2 und der Person P eine sogenannte nicht-neutrale Sitzposition.

Die neutrale Sitzposition hat keinen oder einen vernachlässigbaren Einfluss auf das, insbesondere insgesamt, in der Lenkung 24 aktuell wirkende Lenkmoment. Die nicht-neutrale Sitzposition jedoch hat einen relativ großen, nicht zu vernachlässigenden Einfluss auf das aktuell und insbesondere insgesamt in der Lenkung 24 aktuell wirkende Lenkmoment, sodass es vorteilhaft ist, den zuvor genannten Einfluss der Relativposition auf das Lenkmoment zu ermitteln.

Bei dem Verfahren wird mittels der elektronischen Recheneinrichtung 17 wenigstens ein Einflusswert ermittelt, der den Einfluss der Relativposition auf das Lenkmoment charakterisiert, das heißt angibt oder beschreibt. Hierfür wird bei dem Verfahren mittels der elektronischen Recheneinrichtung 17 wenigstens ein Positionswert ermittelt, welcher eine mittels einer, insbesondere elektrischen und/oder elektronischen, Sensoreinrichtung erfasste, das heißt gemessene und durch die Relativposition beeinflusste Messgröße charakterisiert. **In** Abhängigkeit von dem Positionswert wird mittels der elektronischen Recheneinrichtung 17 der Einflusswert ermittelt.

Bei dem in Fig. 1 gezeigten Ausführungsbeispiel ist die mit 25 bezeichnete Sensoreinrichtung ein Bestandteil des Fahrzeugs 1, mithin eine Sensoreinrichtung des Fahrzeugs 1. Bei dem Verfahren wird mittels der Sensoreinrichtung 25 die Messgröße erfasst. Hierdurch können die Messgröße und die aktuelle Relativposition besonders vorteilhaft gemessen werden, sodass der Einflusswert und somit der Einfluss besonders vorteilhaft ermittelt werden können. Außerdem ist es bei dem Verfahren vorgesehen, dass zumindest eine Komponente des Fahrzeugs 1 und somit das Fahrzeug 1 in Abhängigkeit von dem Einflusswert betrieben werden. Beispielsweise ist oder umfasst die Komponente wenigstens eine der Radbremsen und/oder ein Fahrerassistenzsystem und/oder ein Fahrstabilitätssystem oder ein Fahrstabilitätsprogramm des Fahrzeugs 1.

### Bezugszeichenliste

- 1: Fahrzeug
- 2: Fahrzeugrad
- 3: Fahrzeugrad
- 4: Doppelpfeil
- 5: Untergrund
- 6: Doppelpfeil
- 7: Raddrehachse
- 8: Lenkelement
- 9: Lenkgabel
- 10: Griff
- 11: Rahmen
- 12: Raddrehachse
- 13: Schwinge
- 14: Doppelpfeil
- 17: elektronische Recheneinrichtung
- 18: Erfassungseinrichtung
- 23: Lenkmomentsensor
- 24: Lenkung
- 25: Sensoreinrichtung
- G: Gerade
- H: Kopf
- K: Oberkörper
- L: Lenkachse
- P: Person
- rₗₑₐₙ: Winkel
- r_{offs}: Versatz
- S: Schwenkachse
- y: Fahrzeugquerrichtung
- z: Fahrzeughochrichtung

## Patentansprüche

1. Verfahren zum Ermitteln wenigstens eines Einflusswerts, welcher einen Einfluss einer Relativposition zwischen einem Fahrzeug und einer das Fahrzeug (1) nutzenden Person (P) auf ein aktuell in einer Lenkung (24) des Fahrzeugs (1) wirkendes Lenkmoment charakterisiert, bei welchem mittels einer elektronischen Recheneinrichtung (17):
- wenigstens ein Positionswert ermittelt wird, welcher eine mittels einer Sensoreinrichtung (25) erfasste und durch die Relativposition zwischen der das Fahrzeug (1) nutzenden Person (P) und dem Fahrzeug (1) beeinflusste Messgröße charakterisiert; und
- in Abhängigkeit von dem Positionswert der Einflusswert ermittelt wird.

2. Verfahren nach Anspruch 1,
**dadurch gekennzeichnet, dass**
mittels der Sensoreinrichtung (25) die Messgröße erfasst wird.

3. Verfahren nach Anspruch 2,
**dadurch gekennzeichnet, dass**
als zumindest ein Teil der Sensoreinrichtung (25) eine Sensoreinrichtung (25) des Fahrzeugs (1) verwendet wird.

4. Verfahren nach Anspruch 2 oder 3,
**dadurch gekennzeichnet, dass**
als zumindest ein Teil der Sensoreinrichtung (25) eine an der Person (P) angeordnete Sensoreinrichtung verwendet wird.

5. Verfahren nach einem der Ansprüche 2 bis 4,
**dadurch gekennzeichnet, dass**
als zumindest ein Teil der Sensoreinrichtung (25) eine an wenigstens einem Kleidungsstück der Person (P) angeordnete Sensoreinrichtung verwendet wird.

6. Verfahren nach einem der vorhergehenden Ansprüche,
**dadurch gekennzeichnet, dass**
mittels der elektronischen Recheneinrichtung (17) wenigstens ein das aktuell in der Lenkung (24) eines Fahrzeugs (1) wirkende Lenkmoment charakterisierender Ist-Drehmomentwert ermittelt wird, indem mittels der elektronischen Recheneinrichtung (17) der Ist-Drehmomentwert in Abhängigkeit von dem Einflusswert ermittelt wird.

7. Verfahren nach Anspruch 6,
**dadurch gekennzeichnet, dass**
mittels der elektronischen Recheneinrichtung (17) wenigstens eine Größe, welche eine aktuelle Reibung zwischen einem Fahrzeugrad (2) des Fahrzeugs (1) und einem aktuellen Untergrund (5) charakterisiert, ermittelt wird, indem mittels der elektronischen Recheneinrichtung (17):
- wenigstens ein Ist-Winkelwert ermittelt wird, welcher einen aktuellen Rollwinkel des Fahrzeugs (2) charakterisiert;
- wenigstens ein Ist-Geschwindigkeitswert ermittelt wird, welcher eine aktuelle Fahrgeschwindigkeit des Fahrzeugs (2) charakterisiert und mit dem zugehörigen Ist-Winkelwert ein Ist-Wertepaar bildet;
- in Abhängigkeit von dem Ist-Wertepaar aus wenigstens einem für einen Referenz-Reibwert ermittelten Referenz-Kennfeld, welches mehrere Referenz-Winkelwerte, mehrere Referenz-Geschwindigkeitswerte und mehrere Referenz-Drehmomentwerte umfasst und einem jeweiligen Referenz-Wertepaar, welches genau einen der Referenz-Winkelwerte und genau einen der Referenz-Geschwindigkeitswerte umfasst, genau einen der Referenz-Drehmomentwerte zuordnet, eines der Referenz-Wertepaare als zu dem Ist-Wertepaar gehörendes Wertepaar ausgewählt wird;
- der dem ausgewählten Referenz-Wertepaar zugeordnete Referenz-Drehmomentwert ermittelt wird;
- der ermittelte Referenz-Drehmomentwert mit dem ermittelten Ist-Drehmomentwert verglichen wird; und
- die Größe in Abhängigkeit von dem Vergleich des Referenz-Drehmomentwerts mit dem Ist-Drehmomentwert ermittelt wird.

8. Verfahren nach einem der vorhergehenden Ansprüche,
**dadurch gekennzeichnet, dass**
das Fahrzeug (1) als ein einspuriges Zweirad ausgebildet ist.

9. Fahrzeug (1), welches zum Durchführen eines Verfahrens nach einem der vorhergehenden Ansprüche ausgebildet ist.
